(19) **Europäisches Patentamt / European Patent Office / Office européen des brevets**

(11) **EP 3 728 730 B1**

(12) **FASCICULE DE BREVET EUROPEEN**

(45) Date de publication et mention
de la délivrance du brevet:
**29.06.2022 Bulletin 2022/26**

(21) Numéro de dépôt: **18833995.6**

(22) Date de dépôt: **19.12.2018**

(51) Classification Internationale des Brevets (IPC):
**D07B 1/06** (2006.01)

(52) Classification Coopérative des Brevets (CPC):
(C-Sets disponibles)
**D07B 1/0613; D07B 1/0633;** B60C 9/22;
B60C 2009/2016; B60C 2009/2096;
D07B 2201/1044; D07B 2201/1048;
D07B 2201/1052; D07B 2201/1068;
D07B 2201/1076; D07B 2201/2025;
D07B 2201/2029; D07B 2201/2059;
D07B 2201/2061; D07B 2401/2005; (Cont.)

(86) Numéro de dépôt international:
**PCT/FR2018/053419**

(87) Numéro de publication internationale:
**WO 2019/122723 (27.06.2019 Gazette 2019/26)**

(54) **CÂBLES MULTI-TORONS À DEUX COUCHES À TRÈS BAS, BAS ET MOYEN MODULES**

ZWEILAGIGE MEHRSTRÄNGIGE KORDE MIT SEHR NIEDRIGEN, NIEDRIGEN UND MITTLEREN MODULI

TWO-LAYER MULTI-STRAND CORDS HAVING VERY LOW, LOW AND MEDIUM MODULI

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2017 FR 1762502**

(43) Date de publication de la demande:
**28.10.2020 Bulletin 2020/44**

(73) Titulaire: **Compagnie Générale des Etablissements Michelin**
**63000 Clermont-Ferrand (FR)**

(72) Inventeurs:
• **CLEMENT, Emmanuel**
**63040 CLERMONT-FERRAND CEDEX 9 (FR)**
• **BARBAT, Romain**
**63040 CLERMONT-FERRAND CEDEX 9 (FR)**
• **CHEVALLEY, Marianna**
**63040 CLERMONT-FERRAND CEDEX 9 (FR)**
• **GIANETTI, Alexandre**
**63040 CLERMONT-FERRAND CEDEX 9 (FR)**

• **LAURENT, Stéphane**
**63040 CLERMONT-FERRAND CEDEX 9 (FR)**

(74) Mandataire: **Louret, Sylvain**
**M.F.P. MICHELIN**
**Service juridique - Propriété Intellectuelle**
**DCJ/PI - F35 - Site de Ladoux**
**23, place des Carmes - Déchaux**
**63040 Clermont-Ferrand Cedex 9 (FR)**

(56) Documents cités:
**JP-A- 2006 291 376     JP-A- 2006 291 419**

(52) Classification Coopérative des Brevets (CPC):
(Cont.)
D07B 2401/208; D07B 2501/2015; D07B 2501/2046

C-Sets
D07B 2201/2025, D07B 2801/14;
D07B 2201/2059, D07B 2801/12;
D07B 2201/2061, D07B 2801/12, D07B 2801/24

**Description**

L'invention concerne les câbles multi-torons utilisables notamment pour le renforcement de pneumatiques, particulièrement de pneumatiques pour véhicules industriels lourds ainsi que les pneumatiques utilisant des tels câbles.

Un pneumatique à armature de carcasse radiale comprend une bande de roulement, deux bourrelets inextensibles, deux flancs reliant les bourrelets à la bande de roulement et une ceinture, ou armature de sommet, disposée circonférentiellement entre l'armature de carcasse et la bande de roulement. Cette armature de sommet comprend plusieurs armatures aux fonctions différentes.

L'armature de sommet comprend généralement une armature de travail comprenant deux nappes de travail, ou nappes croisées, comprenant des éléments filaires de renfort métalliques de travail agencés les uns sensiblement parallèlement aux autres dans chaque nappe de travail, mais croisés d'une nappe à l'autre, c'est-à-dire inclinés, symétriquement ou non, par rapport au plan circonférentiel médian, d'un angle allant généralement de 15° et 40°. Cette armature de travail permet, entre autres fonctions, la transmission au moins partielle des efforts transversaux exercés par le sol sur le pneumatique lors du roulage de ce dernier afin d'assurer la directionalité du pneumatique, c'est-à-dire la capacité du pneumatique à permettre au véhicule sur lequel il est monté de tourner.

De tels éléments filaires métalliques de travail sont notamment décrits dans WO2008026271. WO2008026271 décrit des câbles multi-torons à deux couches comprenant une couche interne du câble constituée de J>1 torons internes enroulés en hélice et une couche externe du câble constituée de L>1 torons externes enroulés autour de la couche interne du câble. Chaque toron interne et externe est à plusieurs couches et comprend au moins une couche interne constituée de Q>1 fils internes, éventuellement une couche intermédiaire constituée de P>1 fils intermédiaires enroulés autour de la couche interne, et une couche externe constituée de N>1 fils externes enroulés autour de la couche interne ou intermédiaire.

Dans WO2008026271, l'objectif est de fournir des éléments filaires de renfort de travail présentant une rigidité et une force à rupture aussi élevées que possible afin d'éviter les dégâts causés sur l'armature de sommet, et notamment sur l'armature de travail, par les obstacles rencontrés par le pneumatique lors de son roulage.

Dans WO2008026271, cet objectif est atteint en augmentant le nombre de torons internes et externes autant que faire se peut par rapport à des câbles multi-torons classiques dont la force à rupture est plus faible et pour lesquels J=1 et L=6, tels que notamment décrits dans WO2015090920. Ainsi, dans WO2008026271, l'objectif est de lutter contre la déformation imposée par les obstacles rencontrés en leur opposant des câbles les plus rigides et mécaniquement résistants possibles.

Toutefois, si cette solution est efficace contre des obstacles de dimensions relativement petites ou moyennes, elle s'avère inefficace à l'égard des obstacles de dimensions plus grandes. En effet, dans ces cas, les efforts exercés sur les câbles sont supérieurs à la dureté de l'acier et l'obstacle vient alors cisailler les câbles et ce, d'autant plus facilement que ces câbles sont rigides et s'opposent à la déformation imposée par l'obstacle.

L'invention a pour but un câble permettant d'éviter les dégâts causés par les obstacles sollicitant fortement l'armature de sommet, notamment l'armature de travail du pneumatique.

## CABLE SELON L'INVENTION

A cet effet, l'invention a pour objet un câble multi-torons métallique à deux couches comprenant:

- une couche interne du câble constituée de J>1 torons internes enroulés en hélice, chaque toron interne étant à deux couches et comprenant :

  - une couche interne constituée de $Q \geq 1$ fils internes de diamètre D1, et
  - une couche externe constituée de N>1 fils externes de diamètre D2 enroulés autour de la couche interne,

- une couche externe du câble constituée de L>1 torons externes enroulés autour de la couche interne du câble, chaque toron externe étant à trois couches et comprenant :

  - une couche interne constituée de $Q' \geq 1$ fils internes de diamètre D1',
  - une couche intermédiaire constituée de P'>1 fils intermédiaires de diamètre D2' enroulés autour de la couche interne, et
  - une couche externe constituée de N'>1 fils externes de diamètre D3' enroulés autour de la couche intermédiaire,

le câble satisfaisant la relation suivante :

$$95 \le MC \le 175$$

avec

$$MC = (J \times MI + L \times ME) / (J+L)$$

avec

$$MI = 200 \times \cos^4(\alpha) \times [Q \times (D1 / 2)^2 \times \cos^4(\beta) + N \times (D2 / 2)^2 \times \cos^4(\gamma)] / [Q \times (D1 / 2)^2 + N \times (D2 / 2)^2]$$

avec: - D1 et D2 étant exprimés en mm,

- $\alpha$ l'angle d'hélice de chaque toron interne dans la couche interne du câble,
- $\beta$ l'angle d'hélice de chaque fil interne dans la couche interne au sein de chaque toron interne, et
- $\gamma$ l'angle d'hélice de chaque fil externe dans la couche externe au sein de chaque toron interne, et

$$ME = 200 \times \cos^4(\alpha') \times [Q' \times (D1' / 2)^2 \times \cos^4(\beta') + P' \times (D2' / 2)^2 \times \cos^4(\delta') + N' \times (D3' / 2)^2 \times \cos^4(\gamma')] / [Q' \times (D1' / 2)^2 + P' \times (D2' / 2)^2 + N' \times (D3' / 2)^2]$$

avec: - D1', D2' et D3' étant exprimés en mm

- $\alpha'$ l'angle d'hélice de chaque toron externe dans la couche externe du câble,
- $\beta'$ l'angle d'hélice de chaque fil interne dans la couche interne au sein de chaque toron externe,
- $\delta'$ l'angle d'hélice de chaque fil intermédiaire dans la couche intermédiaire au sein de chaque toron externe, et
- $\gamma'$ l'angle d'hélice de chaque fil externe dans la couche externe au sein de chaque toron externe.

Contrairement à l'état de la technique dans lequel les câbles présentent des modules bien supérieurs à 160 GPa et sont donc relativement rigides, les inventeurs ont trouvés que les câbles selon l'invention présentant des modules plus faibles sont plus performants à l'encontre des obstacles sollicitant fortement l'armature de sommet du pneumatique.

En effet, les inventeurs ont trouvé qu'il était plus efficace d'épouser l'obstacle grâce à un câble présentant un module plus faible plutôt que de tenter de rigidifier et de renforcer autant que possible les câbles pour s'opposer aux déformations imposées par les obstacles comme cela était enseigné dans l'état de la technique. En épousant les obstacles, on diminue le cisaillement exercé sur les câbles et donc le risque de rupture de ces câbles.

La valeur de l'indicateur MC des câbles selon l'invention assure que ces derniers présentent des structures correspondant à des modules relativement faibles allant de 50 GPa et 160 GPa et permettant donc d'épouser les obstacles rencontrés contrairement aux câbles de l'état de la technique, bien trop rigides.

En outre, la valeur de l'indicateur MC des câbles selon l'invention assure que ces derniers présentent un module suffisant pour permettre une directionalité suffisante du pneumatique lorsqu'ils sont utilisés dans l'armature de travail.

Les angles d'hélice sont définis par les formules suivantes : $\alpha = \arctan\left(\frac{2\pi\, RI}{PI}\right)$ dans laquelle RI est le rayon d'enroulement des torons internes et PI est le pas d'enroulement de chaque toron interne. $\beta = \arctan\left(\frac{2\pi\, R1}{p1}\right)$ dans laquelle R1 est le rayon d'enroulement des Q fils internes de chaque toron interne et p1 est le pas auquel sont assemblés les Q fils internes au sein de chaque toron interne. Dans le cas où Q=1, R1=0 et donc $\beta$=0. $\gamma = \arctan\left(\frac{2\pi\, R2}{p2}\right)$ dans laquelle R2 est le rayon d'enroulement des N fils externes de chaque toron interne et p2 est le pas auquel sont assemblés les N fils externes au sein de chaque toron interne. $\alpha' = \arctan\left(\frac{2\pi\, RE}{PE}\right)$ dans laquelle RE est le rayon d'enroulement des torons externes et PE est le pas d'enroulement de chaque toron externe. $\beta' = \arctan\left(\frac{2\pi\, R1'}{p1'}\right)$ dans laquelle R1' est le rayon d'enroulement des Q' fils internes de chaque toron externe et p1' est le pas auquel sont assemblés les Q' fils internes au sein de chaque toron externe. Dans le cas où Q'=1, R1'=0 et donc $\beta'$=0. $\delta' = \arctan\left(\frac{2\pi\, R2'}{p2'}\right)$ dans laquelle R2' est le rayon d'enroulement des P' fils intermédiaires de chaque toron externe et p2' est le pas auquel sont assemblés les P' fils intermédiaires au sein de chaque toron externe. $\gamma' = \arctan\left(\frac{2\pi\,R3'}{p3'}\right)$ dans laquelle R3' est le rayon d'enroulement des N' fils externes de chaque toron externe et p3' est le pas auquel sont assemblés les N' fils externes au sein de chaque toron externe.

Les rayons d'enroulement RI et RE sont mesurés sur une coupe transversale perpendiculaire à l'axe principal du câble et correspondent à la distance entre le centre de l'hélice décrite par respectivement chaque toron interne et externe et le centre du câble.

De façon analogue, les rayons d'enroulement R1 et R2 sont mesurés sur une coupe transversale perpendiculaire à l'axe principal de chaque toron interne pris individuellement et correspondent à la distance entre le centre de l'hélice décrite par respectivement chaque fil interne et externe et le centre du toron interne.

Da façon analogue, les rayons d'enroulement R1', R2' et R3' sont mesurés sur une coupe transversale perpendiculaire à l'axe principal de chaque toron externe pris individuellement et correspondent à la distance entre le centre de l'hélice décrite par respectivement chaque fil interne, intermédiaire et externe et le centre du toron externe.

Dans l'invention, le câble est à deux couches de torons, c'est-à-dire qu'il comprend un assemblage constitué de deux couches de torons, ni plus ni moins, c'est-à-dire que l'assemblage a deux couches de torons, pas une, pas trois, mais uniquement deux. La couche externe du câble est enroulée en hélice autour de la couche interne du câble au contact de la couche interne du câble.

Chaque toron interne est à deux couches, c'est-à-dire qu'il comprend un assemblage constitué de deux couches de fils, ni plus ni moins, c'est-à-dire que l'assemblage a deux couches de fils, pas une, pas trois, mais uniquement deux. La couche externe de chaque toron est enroulée autour de la couche interne de ce toron au contact de la couche interne de ce toron.

Chaque toron externe est à trois couches, c'est-à-dire qu'il comprend un assemblage constitué de trois couches de fils, ni plus ni moins, c'est-à-dire que l'assemblage a trois couches de fils, pas deux, pas quatre mais uniquement trois. La couche externe de chaque toron est enroulée en hélice autour de la couche intermédiaire de ce toron au contact de la couche intermédiaire de ce toron. La couche intermédiaire de chaque toron est enroulée en hélice autour de la couche interne de ce toron au contact de la couche interne de ce toron.

En outre, contrairement au cas où J=1 et dans lequel il existerait un risque de voir, sous l'effet des efforts répétés de compression appliqués au câble, le toron interne sortir radialement du câble, la présence de plusieurs torons dans la couche interne du câble (J>1) enroulé en hélice permet de réduire ce risque, les efforts de compression étant alors répartis sur la pluralité de torons de la couche interne du câble et l'hélice maintenant les torons internes les uns avec les autres.

De façon optionnelle et préférée, dans un mode de réalisation, le câble est dépourvu de toute composition polymérique, notamment le câble est dépourvu de gaine de toute composition polymérique recouvrant le toron interne. Dans un autre mode de réalisation, le câble est dépourvu de toute composition élastomérique, notamment le câble est dépourvu de gaine de toute composition élastomérique recouvrant la couche interne du câbe.

Par composition de polymère ou composition polymérique, on entend que la composition comprend au moins un polymère. De préférence, un tel polymère peut être un thermoplastique, par exemple un polyester ou un polyamide, un polymère thermodurcissable, un élastomère, par exemple du caoutchouc naturel, un élastomère thermoplastique ou un mélange de ces polymères.

Par composition d'élastomère ou composition élastomérique, on entend que la composition comprend au moins un élastomère ou un caoutchouc (les deux termes étant synonymes) et au moins un autre composant. De préférence, la composition d'élastomère comprend également un système de vulcanisation, une charge. Plus préférentiellement, l'élastomère est diénique.

Dans la description et les revendications, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de la borne « a » jusqu'à la borne « b » c'est-à-dire incluant les bornes strictes « a » et « b ».

On rappelle que, de manière connue, le pas d'un toron représente la longueur de ce toron, mesurée parallèlement à l'axe du câble, au bout de laquelle le toron ayant ce pas effectue un tour complet autour dudit axe du câble. De façon analogue, le pas d'un fil représente la longueur de ce fil, mesurée parallèlement à l'axe du toron dans lequel il se trouve, au bout de laquelle le fil ayant ce pas effectue un tour complet autour dudit axe du toron.

Par sens d'enroulement d'une couche de torons ou de fils, on entend le sens formé par les torons ou les fils par rapport à l'axe du câble ou du toron. Le sens d'enroulement est communément désigné par la lettre soit Z, soit S.

Les pas, sens d'enroulement et diamètres des fils et des torons sont déterminés conformément à la norme ASTM D2969-04 de 2014. Les rayons d'enroulement sont mesurés par observation au microscope sur une coupe du câble réalisée selon un axe perpendiculaire à l'axe du câble.

Par diamètres de fils proches, on entend que les rapports des diamètres des fils considérés deux à deux vont de 0,75 à 1,25. Par diamètres de fils identiques, on entend que les rapports des diamètres des fils considérés deux à deux sont égaux à 1.

Selon l'invention, le câble est métallique. Par câble métallique, on entend par définition un câble formé de fils constitués intégralement (pour 100% des fils) d'un matériau métallique. Un tel câble métallique est préférentiellement mise en œuvre avec des fils en acier, plus préférentiellement en acier perlitique (ou ferrito-perlitique) au carbone désigné ci-après par "acier au carbone", ou encore en acier inoxydable (par définition, acier comportant au moins 11% de chrome et au moins 50% de fer). Mais il est bien entendu possible d'utiliser d'autres aciers ou d'autres alliages.

Lorsqu'un acier au carbone est avantageusement utilisé, sa teneur en carbone (% en poids d'acier) est de préférence comprise entre 0,2% et 1,2%, notamment entre 0,5% et 1,1% ; ces teneurs représentent un bon compromis entre les propriétés mécaniques requises pour le pneumatique et la faisabilité des fils.

Le métal ou l'acier utilisé, qu'il s'agisse en particulier d'un acier au carbone ou d'un acier inoxydable, peut être lui-même revêtu d'une couche métallique améliorant par exemple les propriétés de mise en œuvre du câble métallique et/ou de ses éléments constitutifs, ou les propriétés d'usage du câble et/ou du pneumatique eux-mêmes, telles que les propriétés d'adhésion, de résistance à la corrosion ou encore de résistance au vieillissement. Selon un mode de réalisation préférentiel, l'acier utilisé est recouvert d'une couche de laiton (alliage Zn-Cu) ou de zinc.

De préférence, les fils d'une même couche d'un toron prédéterminé (interne ou externe) présentent tous sensiblement le même diamètre. Avantageusement les torons internes présentent tous sensiblement le même diamètre. Avantageusement, les torons externes présentent tous sensiblement le même diamètre. Par « sensiblement le même diamètre», on entend que les fils ou les torons ont des diamètres identiques aux tolérances industrielles près.

Dans la présente demande, le module EC d'un câble est calculé en mesurant la pente de la partie élastique d'une courbe force-allongement obtenue en appliquant la norme ASTM D2969-04 de 2014 au câble testé, puis en rapportant cette pente à la section métallique du câble, c'est-à-dire la somme des sections des fils constituants le câble. Alternativement, on peut déterminer la section métallique en mesurant la masse linéique du câble conformément à la norme ASTM D2969-04 de 2014 et en divisant cette masse linéique par la densité de l'acier utilisé.

La partie élastique de la courbe correspond à une partie sensiblement linéaire de la courbe force-allongement, partie qui est complémentaire à la partie structurale et à la partie plastique de la courbe force-allongement. La partie élastique correspond à un allongement élastique Ae et résulte de la construction du câble, notamment des angles des différentes couches et des diamètres des fils. La partie élastique, et l'allongement Ae correspondant, de la courbe force-allongement sont notamment décrits dans les documents US5843583, WO 2005/014925 et WO2007/090603 et correspondent à la partie et à l'allongement de la courbe force-allongement compris entre :

- la partie structurale correspondant à l'allongement structural As, résultant de l'aération du câble, c'est-à-dire l'espace vacant entre les différents fils ou torons constituants le câble, et
- la partie plastique correspondant à l'allongement plastique Ap, résultant de la plasticité (déformation irréversible au-delà de la limite d'élasticité) d'un ou plusieurs fils du câble.

Pour certains câbles, il n'existe pas d'aération dans le câble si bien que l'allongement structural As est nul. Dans tous les cas (As nul et As non nul), la partie élastique correspond à la partie sensiblement linéaire de la courbe force-allongement présentant la pente la plus élevée.

Le module EC du câble est mesuré sur un câble issu de fabrication, c'est-à-dire dépourvu de toute composition élastomérique dans laquelle serait noyé le câble pour former une nappe. De façon analogue, le module EI de la couche interne du câble est mesuré en prenant la couche interne du câble soit à l'issue de sa fabrication, soit en déroulant la couche externe de torons externes du câble fini de façon à obtenir la couche interne du câble seule. En variante, on pourra mesurer les modules EC et EI en extrayant un câble d'un pneumatique et en enlevant toute composition élastomérique autour et dans le câble, par exemple par dégommage chimique comme cela est bien connu de l'homme du métier.

De préférence, $95 \leq MC \leq 170$ et plus préférentiellement $110 \leq MC \leq 170$. Dans cet intervalle, le module du câble est encore plus éloigné du module des câbles de l'état de la technique et permet de réduire les dégâts causés par les obstacles sollicitant fortement l'armature de sommet du pneumatique. Dans une variante particulière, $130 \leq MC \leq 170$, de préférence $140 \leq MC \leq 160$.

Dans des modes de réalisation préférés, $71 \leq MI \leq 192$. Le module de la couche interne du câble présente, dans ces modes de réalisation préférés, un module EI avantageusement tel que $36\ GPa \leq EI \leq 180\ GPa$. Dans la variante particulière, $145 \leq MI \leq 185$ et $120\ GPa \leq EI \leq 170\ GPa$.

Les câbles selon l'invention présentant une architecture dans laquelle J>1, les efforts transversaux les plus sévères qui s'exercent dans le câble lorsque celui-ci est mis en tension sont les efforts transversaux s'exerçant entre les torons internes, notamment dans le cas où la couche externe du câble est désaturée, au contraire d'un câble dans lequel J=1 et dans lequel les efforts transversaux les plus sévères sont les efforts transversaux exercés par les torons externes sur les torons internes, notamment dans le cas où la couche externe du câble est désaturée.

Ainsi, dans une première variante dans laquelle la couche interne du câble présente un module relativement faible 71 ≤ MI ≤ 135. Dans cette première variante, le module EI de la couche interne du câble est avantageusement tel que 36 GPa ≤ EI ≤ 94 GPa. Ainsi, plus le module de la couche interne est faible, mieux seront repris les efforts principaux et meilleure sera la force à rupture du câble. On maximise ici la force à rupture du câble en utilisant un module de la couche interne relativement faible.

Dans une deuxième variante, la couche interne du câble présentant un module plus élevé, 136 ≤ MI ≤ 192. Dans cette deuxième variante, le module EI de la couche interne du câble est avantageusement tel que 95 GPa ≤ EI ≤ 180 GPa.

Dans des modes de réalisation préférés, 71 ≤ ME ≤ 181. Dans la variante particulière, 120 ≤ ME ≤ 160.

Dans une première variante, la couche externe du câble présente un module relativement faible, 71 ≤ ME ≤ 120. Dans cette première variante, le module de la couche externe étant relativement faible, la couche externe est apte à résister aux coupures consécutives aux sollicitions d'indenteurs. On maximise donc ici la résistance aux coupures du câble.

Dans une deuxième variante, la couche externe du câble présente un module plus élevé, 121 ≤ ME ≤ 181. Du fait du module relativement faible du câble, une valeur relativement élevée du module de la couche externe entraine une valeur relativement faible du module de la couche interne et donc une excellente force à rupture du câble

Dans un mode de réalisation dans lequel les couches interne et externe du câble présentent des modules relativement proches, 0,70 ≤ ME/MI ≤ 1,30. Dans ce mode de réalisation, les inventeurs émettent l'hypothèse que l'âme et la couche travaillent sensiblement ensemble lorsque le câble est sollicité, notamment en traction. Ainsi, on maximise le compromis entre force à rupture du câble et résistance aux coupures. Dans ce mode de réalisation, la couche interne du câble et le câble présentent des modules EC et EI relativement proches avantageusement tels que 0,49 ≤ EC/EI ≤ 1,49. Dans la variante particulière, 0,60 ≤ EC/EI ≤ 1,20.

Dans un autre mode de réalisation dans lequel les couches interne et externe du câble présentent des modules relativement différents, ME/MI ≤ 0,69 ou 1,31 ≤ ME/MI.

Dans une variante, la couche interne du câble présente un module relativement élevé par rapport au module de la couche externe du câble, c'est-à-dire ME/MI ≤ 0,69, de préférence 0,40 ≤ ME/MI ≤ 0,69. Dans cette variante, la couche interne du câble présente un module relativement élevé par rapport au module du câble, c'est-à-dire avantageusement tels que EC/EI ≤ 0,72, de préférence 0,36 ≤ EC/EI ≤ 0,72. Dans cette variante, on favorise la résistance aux coupures du câble par rapport à sa force à rupture.

Dans une autre variante, la couche interne du câble présente un module relativement faible par rapport au module de la couche externe du câble, c'est-à-dire 1,31 ≤ ME/MI, de préférence 1,31 ≤ ME/MI ≤ 2,03. Dans cette autre variante, avantageusement tels que 1,02 ≤ EC/EI, de préférence 1,02 ≤ EC/EI ≤ 1,90. Dans cette variante, on favorise la force à rupture du câble par rapport à sa résistance aux coupures.

Dans des modes préférés de l'invention, les câbles présentent les caractéristiques structurelles avantageuses suivantes.

Dans un mode de réalisation, D1, D2, D1', D2' et D3' vont chacun de 0,15 mm à 0,60 mm, de préférence de 0,20 mm à 0,50 mm, plus préférentiellement de 0,23 mm à 0,45 mm et encore plus préférentiellement de 0,25 mm à 0,40 mm.

Avantageusement, la couche interne du câble est enroulée dans un sens de couche interne du câble et chaque couche interne (lorsque Q>1) et externe de chaque toron interne est enroulée dans le même sens d'enroulement que le sens de couche interne du câble.

Avantageusement, la couche externe du câble est enroulée dans un sens de couche externe du câble et chaque couche interne (lorsque Q'>1), intermédiaire et externe de chaque toron externe est enroulée dans le même sens d'enroulement que le sens de couche externe du câble.

Dans un mode de réalisation, le sens de couche interne du câble et le sens de couche externe du câble sont opposés. Dans ce mode de réalisation, on réduit le risque d'éventuels glissements non désirés des torons externes dans des gorges formées entre les torons internes du fait d'un croisement entre les torons internes et externes.

Dans un autre mode de réalisation, le sens de couche interne du câble et le sens de couche externe du câble sont les mêmes. Dans ce mode de réalisation, la fabrication est relativement aisée car il n'est pas nécessaire contrairement au mode de réalisation précédent de différencier les sens d'enroulement entre les couches interne et externe du câble. Néanmoins, les contacts entre les fils externes des couches externes des torons internes et externes sont relativement longs ce qui peut, dans certaines combinaisons de pas, diamètres et architectures de câbles, générer des défauts d'assemblage dus, par exemple, à un glissement non désiré des torons externes dans les gorges formées entre les torons internes.

Dans un mode de réalisation préféré, l'angle d'hélice α de chaque toron interne dans la couche interne du câble va de 3° à 36°. En contrôlant principalement la valeur de l'angle d'hélice α, on contrôle largement la valeur du module associé à la couche interne du câble. En effet, l'angle d'hélice α intervient majoritairement par rapport aux angles β et γ dont la contribution au module est plus faible. Ainsi, plus l'angle d'hélice α de chaque toron interne est élevé, moins le module associé à la couche interne est élevé. Ainsi, Avantageusement, les torons internes sont enroulés en hélice à un pas PI allant de 10 mm à 65 mm, de préférence de 10 mm à 45 mm. Dans la variante particulière, l'angle d'hélice $\alpha$ va de 8° à 18°.

Dans un mode de réalisation préféré, l'angle d'hélice $\alpha'$ de chaque toron externe dans la couche externe du câble va de 10° à 34°. De façon analogue à l'angle d'hélice $\alpha$, en contrôlant principalement la valeur de l'angle d'hélice $\alpha'$, on contrôle largement la valeur du module associé à la couche externe du câble. En effet, l'angle d'hélice $\alpha'$ intervient majoritairement par rapport aux angles $\beta'$, $\delta'$ et $\gamma'$ dont la contribution au module est plus faible. Ainsi, plus l'angle d'hélice $\alpha'$ de chaque toron externe est élevé, moins le module associé à la couche externe est élevé. Avantageusement, les L torons externes sont enroulés en hélice à un pas PE allant de 30 mm à 65 mm, de préférence de 30 mm à 60 mm. Dans la variante particulière, l'angle d'hélice $\alpha'$ va de 15° à 25°.

Avantageusement, $16° \leq 2\alpha + \beta + \gamma \leq 105°$. Dans un mode de réalisation dans lequel Q=1, on a avantageusement $16° \leq 2\alpha + \beta + \gamma \leq 86°$. Dans un mode de réalisation dans lequel Q>1, on a avantageusement $20° \leq 2\alpha + \beta + y \leq 105°$. Pour des diamètres de fils utilisés identiques ou proches, les angles ainsi définis permettent de définir structurellement la couche interne du câble et les torons internes de cette couche afin d'obtenir un câble conforme à l'invention facile à fabriquer industriellement en jouant uniquement sur les angles d'hélice $\alpha$, $\beta$ et $\gamma$. Dans la variante particulière, $30° \leq 2\alpha + \beta + \gamma \leq 60°$.

Avantageusement, $47° \leq 3\alpha' + \beta' + \delta' + \gamma' \leq 147°$. Dans un mode de réalisation dans lequel Q'=1, on a avantageusement $47° \leq 3\alpha' + \beta' + \delta' + \gamma' \leq 147°$. Dans un mode de réalisation dans lequel Q'>1, on a avantageusement $62° \leq 3\alpha' + \beta' + \delta' + \gamma' \leq 140°$. Pour des diamètres de fils utilisés identiques ou proches, les angles ainsi définis permettent de définir structurellement la couche externe du câble et les torons externes de cette couche afin d'obtenir un câble conforme à l'invention facile à fabriquer industriellement en jouant uniquement sur les angles d'hélice $\alpha'$, $\beta'$, $\delta'$ et $\gamma'$. Dans la variante particulière, $65° \leq 3\alpha' + \beta' + \delta' + \gamma' \leq 95°$.

Avantageusement, $84° \leq 2\alpha + \beta + \gamma + 3\alpha' + \beta' + \delta' + \gamma' \leq 226°$. Dans un mode de réalisation dans lequel Q=1 et Q'=1, on a avantageusement $84° \leq 2\alpha + \beta + \gamma + 3\alpha' + \beta' + \delta' + \gamma' \leq 199°$. Dans un mode de réalisation dans lequel Q>1, Q'=1, on a avantageusement $88° \leq 2\alpha + \beta + \gamma + 3\alpha' + \beta' + \delta' + \gamma' \leq 206°$. Dans un mode de réalisation dans lequel Q=1 et Q'>1, on a avantageusement $96° \leq 2\alpha + \beta + \gamma + 3\alpha' + \beta' + \delta' + \gamma' \leq 214°$. Dans un mode de réalisation dans lequel Q>1, Q'>1, on a avantageusement $99° \leq 2\alpha + \beta + \gamma + 3\alpha' + \beta' + \delta' + \gamma' \leq 226°$. Pour des diamètres de fils utilisés identiques ou proches, les angles ainsi définis permettent de définir structurellement un câble conforme à l'invention facile à fabriquer industriellement en jouant uniquement sur les angles d'hélice $\alpha$, $\alpha'$, $\beta$, $\beta'$, $\delta'$, $\gamma$ et $\gamma'$. Dans la variante particulière, $110° \leq 2\alpha + \beta + \gamma + 3\alpha' + \beta' + \delta' + \gamma' \leq 150°$.

Dans un mode de réalisation dans lequel Q>1, l'angle d'hélice $\beta$ de chaque fil interne dans la couche interne au sein de chaque toron interne va de 4° à 17°. Avantageusement, dans le cas où Q>1, les Q fils internes de chaque toron interne sont assemblés au sein de chaque toron interne à un pas p1 allant de 5 à 20 mm.

Dans la variante particulière, $\beta$ va de 7° à 17° et p1 va de 2 à 20 mm.

Dans un mode de réalisation dans lequel Q>1, l'angle d'hélice $\gamma$ de chaque fil externe dans la couche externe au sein de chaque toron interne va de 7° à 20°. Avantageusement, les N fils externes de chaque toron interne sont assemblés au sein de chaque toron interne à un pas p2 allant de 5 à 40 mm.

Dans un mode de réalisation dans lequel Q=1, l'angle d'hélice $\gamma$ de chaque fil externe dans la couche externe au sein de chaque toron interne va de 5° à 26°. Avantageusement, les N fils externes de chaque toron interne sont assemblés au sein de chaque toron interne à un pas p2 allant de 5 à 30 mm.

Dans la variante particulière, $\gamma$ va de 7° à 17° et p2 va de 4 à 40 mm.

Dans un mode de réalisation dans lequel Q'>1, l'angle d'hélice $\beta'$ de chaque fil interne dans la couche interne au sein de chaque toron externe va de 4° à 20°. Avantageusement, les Q' fils internes de chaque toron externe sont assemblés au sein de chaque toron externe à un pas p1' allant de 5 à 15 mm.

Dans la variante particulière, $\beta'$ va de 10° à 20° et p1' va de 1 à 10 mm.

Dans un mode de réalisation dans lequel Q'=1, l'angle d'hélice $\delta'$ de chaque fil intermédiaire dans la couche intermédiaire au sein de chaque toron externe va de 6° à 22°. Avantageusement, les P' fils intermédiaires de chaque toron externe sont assemblés au sein de chaque toron externe à un pas p2' allant de 5 à 20 mm.

Dans un mode de réalisation dans lequel Q'>1, l'angle d'hélice $\delta'$ de chaque fil intermédiaire dans la couche intermédiaire au sein de chaque toron externe va de 8° à 22°. Avantageusement, les P' fils intermédiaires de chaque toron externe sont assemblés au sein de chaque toron externe à un pas p2' allant de 10 à 20 mm.

Dans la variante particulière, $\delta'$ va de 10° à 20° et p2' va de 2 à 20 mm.

Dans un mode de réalisation dans lequel Q'=1, l'angle d'hélice $\gamma'$ de chaque fil externe dans la couche externe au sein de chaque toron externe va de 7° à 22°. Avantageusement, les N' fils externes de chaque toron externe sont assemblés au sein de chaque toron externe à un pas p3' allant de 10 à 40 mm.

Dans un mode de réalisation dans lequel Q'>1, l'angle d'hélice $\gamma'$ de chaque fil externe dans la couche externe au sein de chaque toron externe va de 9° à 25°. Avantageusement, les N' fils externes de chaque toron externe sont assemblés au sein de chaque toron externe à un pas p3' allant de 10 à 40 mm.

Dans la variante particulière, $\gamma$' va de 10° à 20° et p3' va de 4 à 40 mm.

Les combinaisons d'angles d'hélice et de pas décrites ci-dessus conduisent à des câbles présentant les modules avantageux de l'invention. De plus, les pas p1, p1', p2, p2' et p3' dans ces plages préférentielles permettent d'obtenir un câble présentant des propriétés mécaniques compatibles avec un usage pneumatique, un coût et une masse linéique du câble relativement faible.

**Câbles selon un mode de réalisation A de l'invention**

Dans un mode de réalisation, le câble présente un module relativement très bas et est tel que $95 \leq MC \leq 140$. Dans ce mode de réalisation, on privilégie la capacité du câble à épouser les obstacles rencontrés par rapport à la capacité du câble à conférer une directionalité élevée du pneumatique. De tels câbles conformes au mode A présentent avantageusement des modules allant de 50 GPa à 89 GPa et sont alors dénommés câbles à très bas module.

Dans des variantes préférées de câbles conformes au mode A, $71 \leq MI \leq 191$. Dans ces variantes préférées, on a avantageusement 36 GPa $\leq EI \leq$ 174 GPa.

Dans une première variante dans laquelle la couche interne du câble conforme au mode A présente un module relativement faible, $71 \leq MI \leq 135$. Dans cette première variante, on a avantageusement 36 GPa $\leq EI \leq$ 94 GPa. Comme expliqué ci-dessus, on maximise ici la force à rupture du câble en utilisant un module de la couche interne relativement faible.

Dans une deuxième variante dans laquelle la couche interne du câble conforme au mode A présente un module plus élevé, $136 \leq MI \leq 191$. Dans cette deuxième variante, on a avantageusement 95 GPa $\leq EI \leq$ 174 GPa. Du fait du très bas module du câble, une valeur relativement élevée du module de la couche interne entraine une valeur relativement faible du module de la couche externe et donc une excellente résistance aux coupures du câble.

Dans des variantes préférées de câbles conformes au mode A, $71 \leq ME \leq 163$.

Dans une première variante dans laquelle la couche externe du câble conforme au mode A présente un module relativement faible, $71 \leq ME \leq 120$. Comme expliqué ci-dessus, on maximise ici la résistance aux coupures du câble en utilisant un module de la couche externe relativement faible.

Dans une deuxième variante dans laquelle la couche externe du câble conforme au mode A présente un module plus élevé, $121 \leq ME \leq 163$. Du fait du très bas module du câble, une valeur relativement élevée du module de la couche externe entraine une valeur relativement faible du module de la couche interne et donc une excellente force à rupture du câble.

Dans un mode de réalisation dans lequel les couches interne et externe du câble conforme au mode A présentent des modules relativement proches, $0,70 \leq ME/MI \leq 1,30$. Dans cette variante, les inventeurs émettent l'hypothèse que l'âme et la couche travaillent sensiblement ensemble lorsque le câble conforme au mode A est sollicité, notamment en traction. Dans cette variante, on a alors avantageusement $0,49 \leq EC/EI \leq 1,24$. Ainsi, on maximise le compromis entre force à rupture du câble et résistance aux coupures.

Dans un mode de réalisation dans lequel les couches interne et externe du câble conforme au mode A présentent des modules relativement différents, $ME/MI \leq 0,69$ ou $1,31 \leq ME/MI$.

Dans une variante, la couche interne du câble conforme au mode A présente un module relativement élevé par rapport au module de la couche externe du câble conforme au mode A, c'est-à-dire $ME/MI \leq 0,69$, de préférence $0,40 \leq ME/MI \leq 0,69$. Dans cette variante, on a alors avantageusement $EC/EI \leq 0,69$, de préférence $0,36 \leq EC/EI \leq 0,69$. Dans cette variante, on favorise la résistance aux coupures du câble par rapport à sa force à rupture.

Dans une autre variante, la couche interne du câble conforme au mode A présente un module relativement petit par rapport au module de la couche externe du câble conforme au mode A, c'est-à-dire $1,31 \leq ME/MI$, de préférence $1,31 \leq ME/MI \leq 2,12$. Dans cette variante, on a alors avantageusement $1,02 \leq EC/EI$, de préférence $1,02 \leq EC/EI \leq 1,90$. Dans cette variante, on favorise la force à rupture du câble par rapport à sa résistance aux coupures.

Dans des variantes préférées, les câbles conformes au mode A et à très bas module présentent les caractéristiques structurelles avantageuses suivantes.

De préférence, l'angle d'hélice $\alpha$ de chaque toron interne dans la couche interne du câble conforme au mode A va de 5° à 36°.

Dans un mode de réalisation préféré, l'angle d'hélice $\alpha$' de chaque toron externe dans la couche externe du câble conforme au mode A va de 14° à 34°.

Comme précisé ci-dessus, en contrôlant principalement la valeur des angles d'hélice $\alpha$ et $\alpha$', on contrôle largement la valeur du module associé aux couches interne et externe du câble. Ainsi, pour des angles d'hélice $\alpha$ et $\alpha$' relativement élevés, on obtient des modules associés à ces couches relativement très faibles permettant d'obtenir un câble conforme au mode A et à très bas module.

Avantageusement, $20° \leq 2\alpha + \beta + \gamma \leq 105°$. Dans un mode de réalisation dans lequel Q=1, on a avantageusement $20° \leq 2\alpha + \beta + \gamma \leq 86°$. Dans un mode de réalisation dans lequel Q>1, on a avantageusement $27° \leq 2\alpha + \beta + \gamma \leq 105°$. Pour des diamètres de fils utilisés identiques ou proches, les angles ainsi définis permettent de définir structurellement la couche interne du câble et les torons internes de cette couche afin d'obtenir un câble conforme au mode A de l'invention et à très bas module facile à fabriquer industriellement en jouant uniquement sur les angles d'hélice $\alpha$, $\beta$ et y.

Avantageusement, $66° \leq 3\alpha' + \beta' + \delta' + \gamma' \leq 147°$. Dans un mode de réalisation dans lequel Q'=1, on a avantageusement $66° \leq 3\alpha' + \beta' + \delta' + y' \leq 147°$. Dans un mode de réalisation dans lequel Q'>1, on a avantageusement $75° \leq 3\alpha' + \beta' + \delta' + y' \leq 140°$. Pour des diamètres de fils utilisés identiques ou proches, les angles ainsi définis permettent de définir structurellement la couche externe du câble et les torons externes de cette couche afin d'obtenir un câble conforme au mode A de l'invention et à très bas module facile à fabriquer industriellement en jouant uniquement sur les angles d'hélice $\alpha'$, $\beta'$, y' et $\delta'$.

Avantageusement, $146° \leq 2\alpha + \beta + \gamma + 3\alpha' + \beta' + \delta' + \gamma' \leq 226°$. Dans un mode de réalisation dans lequel Q=1 et Q'=1, on a avantageusement $134° \leq 2\alpha + \beta + \gamma + 3\alpha' + \beta' + \delta' + \gamma' \leq 199°$. Dans un mode de réalisation dans lequel Q>1, Q'=1, on a avantageusement $130° \leq 2\alpha + \beta + \gamma + 3\alpha' + \beta' + \delta' + \gamma' \leq 206°$. Dans un mode de réalisation dans lequel Q=1 et Q'>1, on a avantageusement $152° \leq 2\alpha + \beta + \gamma + 3\alpha' + \beta' + \delta' + \gamma' \leq 214°$. Dans un mode de réalisation dans lequel Q>1, Q'>1, on a avantageusement $146° \leq 2\alpha + \beta + \gamma + 3\alpha' + \beta' + \delta' + \gamma' \leq 226°$. Pour des diamètres de fils utilisés identiques ou proches, les angles ainsi définis permettent de définir structurellement un câble conforme au mode A de l'invention et à très bas module facile à fabriquer industriellement en jouant uniquement sur les angles d'hélice $\alpha$, $\alpha'$, $\beta$, $\beta'$, $\gamma$, $\gamma'$ et $\delta'$.

Les valeurs des angles d'hélice $\beta$, $\gamma$, $\beta'$, y', $\delta'$, ainsi que celles des pas p1, p2, p1', p2', p3' permettant d'obtenir des câbles conformes au mode A et à très bas module sont identiques à celles déjà décrites ci-dessus.

## Câbles selon un mode de réalisation B de l'invention

Dans un autre mode de réalisation, le câble présente un module relativement bas et est tel que $145 \leq MC \leq 163$. Dans ce mode de réalisation, on adopte un compromis équilibré entre la capacité du câble à épouser les obstacles rencontrés et la capacité du câble à conférer une directionalité élevée du pneumatique. De tels câbles conformes au mode B présentent avantageusement des modules allant de 90 GPa à 130 GPa et sont alors dénommés câbles à bas module.

Dans des variantes préférées de câbles conformes au mode B, $81 \leq MI \leq 192$. On a alors avantageusement $56 \text{ GPa} \leq EI \leq 180 \text{ GPa}$.

Dans une première variante dans laquelle la couche interne du câble conforme au mode B présente un module relativement faible, $81 \leq MI \leq 135$. Dans cette première variante, on a alors avantageusement, $56 \text{ GPa} \leq EI \leq 94 \text{ GPa}$. Comme expliqué ci-dessus, on maximise ici la force à rupture du câble en utilisant un module de la couche interne relativement faible.

Dans une deuxième variante dans laquelle la couche interne du câble conforme au mode B présente un module plus élevé, $136 \leq MI \leq 192$. Dans cette deuxième variante, on a alors $95 \text{ GPa} \leq EI \leq 180 \text{ GPa}$.

Dans des variantes préférées de câbles conformes au mode B, $100 \leq ME \leq 174$.

Dans une première variante dans laquelle la couche externe du câble conforme au mode B présente un module relativement faible, $100 \leq ME \leq 120$. Comme expliqué ci-dessus, on maximise ici la résistance aux coupures du câble en utilisant un module de la couche externe relativement faible.

Dans une deuxième variante dans laquelle la couche externe du câble conforme au mode B présente un module plus élevé, $121 \leq ME \leq 174$. Du fait du bas module du câble, une valeur relativement élevée du module de la couche externe entraine une valeur relativement faible du module de la couche interne et donc une excellente force à rupture du câble.

Dans un mode de réalisation dans lequel les couches interne et externe du câble conforme au mode B présentent des modules relativement proches, $0,70 \leq ME/MI \leq 1,30$. Dans cette variante, on a alors avantageusement $0,55 \leq EC/EI \leq 1,44$. Dans cette variante, les inventeurs émettent l'hypothèse que l'âme et la couche travaillent sensiblement ensemble lorsque le câble conforme au mode B est sollicité, notamment en traction. Ainsi, on maximise le compromis entre force à rupture du câble et résistance aux coupures.

Dans un mode de réalisation dans lequel les couches interne et externe du câble conforme au mode B présentent des modules relativement différents, $ME/MI \leq 0,69$ ou $1,31 \leq ME/MI$.

Dans une variante, la couche interne du câble conforme au mode B présente un module relativement élevé par rapport au module de la couche externe du câble conforme au mode B, c'est-à-dire $ME/MI \leq 0,69$, de préférence $0,55 \leq ME/MI \leq 0,69$. Dans cette variante, on a alors avantageusement $EC/EI \leq 0,72$, de préférence $0,52 \leq EC/EI \leq 0,72$. Dans cette variante, on favorise la résistance aux coupures du câble par rapport à sa force à rupture.

Dans une autre variante, la couche interne du câble conforme au mode B présente un module relativement petit par rapport au module de la couche externe du câble conforme au mode B, c'est-à-dire $1,31 \leq ME/MI$, de préférence $1,31 \leq ME/MI \leq 1,89$. Dans cette variante, on a alors avantageusement $1,15 \leq EC/EI$, de préférence $1,15 \leq EC/EI \leq 1,62$. Dans cette variante, on favorise la force à rupture du câble par rapport à sa résistance aux coupures.

Dans des variantes préférées, les câbles conformes au mode B et à bas module présentent les caractéristiques structurelles avantageuses suivantes.

De préférence, l'angle d'hélice $\alpha$ de chaque toron interne dans la couche interne du câble conforme au mode B va de 3° à 31°.

Dans un mode de réalisation préféré, l'angle d'hélice $\alpha$' de chaque toron externe dans la couche externe du câble conforme au mode B va de 10° à 31°.

Comme précisé ci-dessus, en contrôlant principalement la valeur des angles d'hélice $\alpha$ et $\alpha$', on contrôle largement la valeur du module associé aux couches interne et externe du câble. Ainsi, pour des angles d'hélice $\alpha$ et $\alpha$' relativement moyens, on obtient des modules associés à ces couches relativement faibles permettant d'obtenir un câble conforme au mode B et à bas module.

Avantageusement, $16° \leq 2\alpha + \beta + \gamma \leq 86°$. Dans un mode de réalisation dans lequel Q=1, on a avantageusement $16° \leq 2\alpha + \beta + \gamma \leq 86°$. Dans un mode de réalisation dans lequel Q>1, on a avantageusement $19° \leq 2\alpha + \beta + \gamma \leq 85°$. Pour des diamètres de fils utilisés identiques ou proches, les angles ainsi définis permettent de définir structurellement la couche interne du câble et les torons internes de cette couche afin d'obtenir un câble conforme au mode B de l'invention et à bas module facile à fabriquer industriellement en jouant uniquement sur les angles d'hélice $\alpha$, $\beta$ et $\gamma$.

Avantageusement, $54° \leq 3\alpha' + \beta' + \delta' + \gamma' \leq 125°$. Dans un mode de réalisation dans lequel Q'=1, on a avantageusement $54° \leq 3\alpha' + \beta' + \delta' + \gamma' \leq 120°$. Dans un mode de réalisation dans lequel Q'>1, on a avantageusement $64° \leq 3\alpha' + \beta' + \delta' + \gamma' \leq 125°$. Pour des diamètres de fils utilisés identiques ou proches, les angles ainsi définis permettent de définir structurellement la couche externe du câble et les torons externes de cette couche afin d'obtenir un câble conforme au mode B de l'invention et à bas module facile à fabriquer industriellement en jouant uniquement sur les angles d'hélice $\alpha$', $\beta$', $\gamma$' et $\delta$'.

Avantageusement, $87° \leq 2\alpha + \beta + \gamma + 3\alpha' + \beta' + \delta' + y' \leq 172°$. Dans un mode de réalisation dans lequel Q=1 et Q'=1, on a avantageusement $87° \leq 2\alpha + \beta + \gamma + 3\alpha' + \beta' + \delta' + \gamma' \leq 160°$. Dans un mode de réalisation dans lequel Q>1, Q'=1, on a avantageusement $90° \leq 2\alpha + \beta + \gamma + 3\alpha' + \beta' + \delta' + \gamma' \leq 165°$. Dans un mode de réalisation dans lequel Q=1 et Q'>1, on a avantageusement $111° \leq 2\alpha + \beta + \gamma + 3\alpha' + \beta' + \delta' + \gamma' \leq 166°$. Dans un mode de réalisation dans lequel Q>1, Q'>1, on a avantageusement $111° \leq 2\alpha + \beta + \gamma + 3\alpha' + \beta' + \delta' + \gamma' \leq 172°$. Pour des diamètres de fils utilisés identiques ou proches, les angles ainsi définis permettent de définir structurellement un câble conforme au mode B de l'invention et à bas module facile à fabriquer industriellement en jouant uniquement sur les angles d'hélice $\alpha$, $\alpha$', $\beta$, $\beta$', $\gamma$,$\gamma$' et $\delta$'.

Les valeurs des angles d'hélice $\beta$, $\gamma$,$\beta$', $\gamma$', $\delta$', ainsi que celles des pas p1, p2, p1', p2', p3' permettant d'obtenir des câbles conformes au mode B et à bas module sont identiques à celles déjà décrites ci-dessus.

## Câbles selon un mode de réalisation C de l'invention

Dans encore un autre mode de réalisation, le câble présente un module relativement moyen et est tel que $152 \leq MC \leq 170$. Dans ce mode de réalisation, on privilégie la capacité du câble à conférer une directionalité élevée du pneumatique par rapport à la capacité du câble à épouser les obstacles rencontrés. De tels câbles conformes au mode C présentent avantageusement des modules allant de 131 GPa à 160 GPa et sont alors dénommés câbles à moyen module.

Dans des variantes préférées de câbles conformes au mode C, $125 \leq MI \leq 192$. On a alors avantageusement $86 \text{ GPa} \leq EI \leq 180 \text{ GPa}$.

Dans une première variante dans laquelle la couche interne du câble conforme au mode C présente un module relativement faible, $125 \leq MI \leq 135$. Dans cette première variante,

on a alors avantageusement, $86 \text{ GPa} \leq EI \leq 94 \text{ GPa}$. Comme expliqué ci-dessus, on maximise ici la force à rupture du câble en utilisant un module de la couche interne relativement faible.

Dans une deuxième variante dans laquelle la couche interne du câble conforme au mode B présente un module plus élevé, $136 \leq MI \leq 192$. Dans cette deuxième variante, on a alors $95 \text{ GPa} \leq EI \leq 180 \text{ GPa}$.

Dans des variantes préférées de câbles conformes au mode C, $142 \leq ME \leq 171$.

Dans un mode de réalisation dans lequel les couches interne et externe du câble conforme au mode C présentent des modules relativement proches, $0,70 \leq ME/MI \leq 1,30$, de préférence $0,75 \leq ME/MI \leq 1,30$. Dans cette variante, on a alors avantageusement $0,76 \leq EC/EI \leq 1,49$. Dans cette variante mode de réalisation, les inventeurs émettent l'hypothèse que l'âme et la couche travaillent sensiblement ensemble lorsque le câble conforme au mode C est sollicité, notamment en traction. Ainsi, on maximise le compromis entre force à rupture du câble et résistance aux coupures.

Dans une variante, la couche interne du câble conforme au mode C présente un module relativement petit par rapport au module de la couche externe du câble conforme au mode C, c'est-à-dire $1,31 \leq ME/MI$, de préférence $1,31 \leq ME/MI \leq 1,43$. Dans cette variante, on a alors avantageusement $1,50 \leq EC/EI$, de préférence $1,50 \leq EC/EI \leq 1,69$. Dans cette variante, on favorise la force à rupture du câble par rapport à sa résistance aux coupures.

Dans des variantes préférées, les câbles conformes au mode C et à moyen module présentent les caractéristiques structurelles avantageuses suivantes.

De préférence, l'angle d'hélice $\alpha$ de chaque toron interne dans la couche interne du câble conforme au mode C va de 3° à 20°.

Dans un mode de réalisation préféré, l'angle d'hélice $\alpha$' de chaque toron externe dans la couche externe du câble conforme au mode C va de 10° à 22°.

Comme précisé ci-dessus, en contrôlant principalement la valeur des angles d'hélice $\alpha$ et $\alpha$', on contrôle largement la valeur du module associé aux couches interne et externe du câble. Ainsi, pour des angles d'hélice $\alpha$ et $\alpha$' relativement petits, on obtient des modules associés à ces couches relativement moyens permettant d'obtenir un câble conforme au mode C et à moyen module.

Avantageusement, $16° \leq 2\alpha + \beta + \gamma \leq 68°$. Dans un mode de réalisation dans lequel Q=1, on a avantageusement $16° \leq 2\alpha + \beta + \gamma \leq 56°$. Dans un mode de réalisation dans lequel Q>1, on a avantageusement $20° \leq 2\alpha + \beta + \gamma \leq 68°$. Pour des diamètres de fils utilisés identiques ou proches, les angles ainsi définis permettent de définir structurellement la couche interne du câble et les torons internes de cette couche afin d'obtenir un câble conforme au mode C de l'invention et à moyen module facile à fabriquer industriellement en jouant uniquement sur les angles d'hélice $\alpha$, $\beta$ et $\gamma$.

Avantageusement, $47° \leq 3\alpha' + \beta' + \gamma' + \delta' \leq 89°$. Dans un mode de réalisation dans lequel Q'=1, on a avantageusement $47° \leq 3\alpha' + \beta' + \gamma' + \delta' \leq 86°$. Dans un mode de réalisation dans lequel Q'>1, on a avantageusement $62° \leq 3\alpha' + \beta' + \gamma' + \delta' \leq 89°$. Pour des diamètres de fils utilisés identiques ou proches, les angles ainsi définis permettent de définir structurellement la couche externe du câble et les torons externes de cette couche afin d'obtenir un câble conforme au mode C de l'invention et à moyen module facile à fabriquer industriellement en jouant uniquement sur les angles d'hélice $\alpha$', $\beta$', $\gamma$' et $\delta$'.

Avantageusement, $84° \leq 2\alpha + \beta + \gamma + 3\alpha' + \beta' + \gamma' + \delta' \leq 136°$. Dans un mode de réalisation dans lequel Q=1 et Q'=1, on a avantageusement $84° \leq 2\alpha + \beta + \gamma + 3\alpha' + \beta' + \gamma' + \delta' \leq 112°$. Dans un mode de réalisation dans lequel Q>1, Q'=1, on a avantageusement $88° \leq 2\alpha + \beta + \gamma + 3\alpha' + \beta' + \gamma' + \delta' \leq 124°$. Dans un mode de réalisation dans lequel Q=1 et Q'>1, on a avantageusement $96° \leq 2\alpha + \beta + \gamma + 3\alpha' + \beta' + \gamma' + \delta' \leq 122°$. Dans un mode de réalisation dans lequel Q>1, Q'>1, on a avantageusement $99° \leq 2\alpha + \beta + \gamma + 3\alpha' + \beta' + \gamma' + \delta' \leq 136°$. Pour des diamètres de fils utilisés identiques ou proches, les angles ainsi définis permettent de définir structurellement un câble conforme au mode C de l'invention et à moyen module facile à fabriquer industriellement en jouant uniquement sur les angles d'hélice $\alpha$, $\alpha$', $\beta$, $\beta$', $\gamma$, $\gamma$' et $\delta$'.

Les valeurs des angles d'hélice $\beta$, $\gamma$, $\beta$', $\gamma$', $\delta$', ainsi que celles des pas p1, p2, p3, p1', p2', p3' permettant d'obtenir des câbles conformes au mode C et à moyen module sont identiques à celles déjà décrites ci-dessus.

Architecture des câbles selon l'invention

Avantageusement, J=2, 3 ou 4, de préférence J=3 ou 4.

Dans un mode de réalisation, L est égal à 7, 8, 9 ou 10, de préférence L=8, 9 ou 10 et plus préférentiellement L=8 ou 9.

Dans une première variante, J=2 et L=7 ou 8, de préférence J=2, L=7.

Dans une deuxième variante, J=3 et L=7, 8 ou 9, de préférence J=3, L=8 ou 9. Dans le cas où L=8, on favorise la désaturation de la couche externe du câble et donc la pénétrabilité du câble entre les torons externes. Dans le cas où L=9, on maximise le nombre de torons externes et donc la force à rupture du câble.

Dans une troisième variante, J=4 et L=7, 8, 9 ou 10, de préférence J=4, L=9.

Dans ces modes de réalisation, notamment ceux où J=3 ou 4, il existe un risque de voir une très forte propagation des agents corrosifs entre les J=3 ou 4 torons internes qui délimitent un capillaire central très favorable à leur propagation le long du câble, lorsque le câble est insuffisamment pénétré. Cet inconvénient peut être surmonté en rendant le câble pénétrable par la composition d'élastomère qui empêche alors les agents corrosifs d'accéder au capillaire central, et dans le meilleur des cas où le capillaire central est lui-même pénétré, la propagation de ces agents corrosifs le long du câble.

Avantageusement, la couche externe du câble est désaturée.

Par définition, une couche de torons désaturée est telle qu'il existe suffisamment d'espace entre les torons de façon à permettre le passage d'une composition d'élastomère. Une couche externe de torons désaturée signifie que les torons externes ne se touchent pas et qu'il y a suffisamment d'espace entre deux torons externes adjacents permettant le passage d'une composition d'élastomère jusqu'aux torons internes. Par opposition, une couche de torons saturée est telle qu'il n'existe suffisamment pas d'espace entre les torons de la couche de façon à permettre le passage d'une composition d'élastomère, par exemple car les torons de la couche se touchent deux à deux.

Avantageusement, la distance inter-torons de la couche externe de torons externes définie, sur une section du câble perpendiculaire à l'axe principal du câble, comme la distance la plus courte qui sépare, en moyenne, les enveloppes circulaires dans lesquelles sont inscrits deux torons externes adjacents, est supérieure ou égale à 30 $\mu$m. De préférence, la distance E inter-torons moyenne séparant deux torons externes adjacents est supérieure ou égale à 70 $\mu$m, plus préférentiellement à 100 $\mu$m, encore plus préférentiellement à 150 $\mu$m et très préférentiellement à 200 $\mu$m.

Comme déjà expliqué ci-dessus, les câbles selon l'invention présentant une architecture dans laquelle J>1, les efforts transversaux les plus sévères qui s'exercent dans le câble lorsque celui-ci est mis en tension sont les efforts transversaux s'exerçant entre les torons internes au contraire d'un câble dans lequel J=1 et dans lequel les efforts transversaux les plus sévères sont les efforts transversaux exercés par les torons externes sur les torons internes. Dans l'état de la technique, on connait des câbles présentant une architecture dans laquelle J>1 et comprenant un nombre de torons externes tels que la couche externe du câble soit saturée de façon à maximiser la force à rupture en ajoutant un nombre maximal de torons externes. Ici, grâce à la désaturation de la couche externe du câble, le câble présente, d'une part, des espaces entre les torons externes permettant le passage de la composition d'élastomère et donc de rendre le câble moins sensible à la corrosion. D'autre part, bien que l'on réduise le nombre de torons externes, la désaturation de la couche externe du câble permet à la composition d'élastomère de pénétrer d'une part, entre les torons externes et, d'autre part, entre les torons internes de façon à former un coussin de composition d'élastomère absorbant au moins partiellement les efforts transversaux s'exerçant entre les torons internes. Ainsi, par rapport un câble analogue présentant une couche externe du câble saturée, on obtient une force à rupture équivalente et une résistance à la corrosion largement améliorée.

Dans un mode de réalisation favorisant la pénétrabilité du câble, la couche externe du câble est complètement insaturée.

Par définition, une couche complètement insaturée de torons est, par opposition à une couche incomplètement insaturée, telle qu'il existe suffisamment de place dans cette couche pour y ajouter au moins un $(X+1)^{ième}$ toron du même diamètre que les X torons de la couche, plusieurs torons pouvant alors être ou non au contact les uns des autres. En l'espèce, il existe suffisamment de place dans la couche externe du câble pour y ajouter au moins un $(L+1)^{ième}$ toron du même diamètre que les L torons externes de la couche externe du câble.

Ainsi, avantageusement, la somme SIE des distances intertorons E de la couche externe du câble est telle que SIE $\geq$ DE. La somme SIE est la somme des distances intertorons E séparant chaque couple de torons adjacents de la couche. La distance intertorons d'une couche est définie, sur une section du câble perpendiculaire à l'axe principal du câble, comme la distance la plus courte qui sépare, en moyenne, deux torons adjacents de la couche. Ainsi, la distance intertorons E est calculée en divisant la somme SIE par le nombre d'espaces séparant les torons de la couche.

Dans un autre mode de réalisation favorisant le compromis entre pénétrabilité et force à rupture, la couche externe du câble est incomplètement insaturée.

Une couche incomplètement insaturée de torons est telle qu'il n'existe pas suffisamment de place dans cette couche pour y ajouter au moins un $(X+1)^{ième}$ toron du même diamètre que les X torons de la couche. En l'espèce, il n'existe pas suffisamment de place dans la couche externe pour y ajouter au moins un $(L+1)^{ième}$ toron externe du même diamètre que les L torons externes de la couche externe du câble.

Par définition, le diamètre de la couche interne DI est le diamètre du cercle le plus petit dans lequel sont circonscrits les torons internes. Le diamètre d'un toron externe DE est le diamètre du cercle le plus petit dans lequel est circonscrit le toron externe. Pour des valeurs relativement élevées de DI/DE, on favorise davantage le passage de la composition d'élastomère entre les torons externes, et, pour des valeurs relativement basses de DI/DE, on assure la stabilité architecturale du câble, on maximise la force à rupture tout en permettant le passage de la composition d'élastomère entre les torons externes, on limite le diamètre externe du câble, on réduit l'épaisseur de la nappe, donc l'échauffement, la résistance au roulement et la masse du pneumatique.

Torons internes des câbles selon l'invention

Dans des modes de réalisation préférés, Q=1, 2, 3 ou 4.

Dans un mode de réalisation, Q=1, N=5 ou 6, de préférence Q=1, N=6.

Dans des modes de réalisation préférés permettant d'augmenter la force à rupture du câble par rapport au mode de réalisation dans lequel Q=1, Q=2, 3 ou 4, de préférence Q=3 ou 4.

Dans ces modes de réalisation préférés dans lesquels Q>1, notamment ceux où Q=3 ou 4, il existe un risque, lorsque le toron est insuffisamment pénétré, de voir une très forte propagation des agents corrosifs entre les Q=3 ou 4 fils internes qui délimitent un capillaire central très favorable à leur propagation le long de chaque toron. Cet inconvénient peut être surmonté en rendant le toron pénétrable par la composition d'élastomère qui empêche alors les agents corrosifs d'accéder au capillaire central, et dans le meilleur des cas où le capillaire central est lui-même pénétré, la propagation de ces agents corrosifs le long du toron.

Dans des modes de réalisation préféré dans lesquels Q>1, N=7, 8, 9 ou 10, de préférence N=8, 9 ou 10 et plus préférentiellement N=8 ou 9.

Dans une première variante, Q=2 et N=7 ou 8, de préférence Q=2, N=7.

Dans une deuxième variante, Q=3 et N=7, 8 ou 9, de préférence Q=3, N=8.

Dans une troisième variante, Q=4 et N=7, 8, 9 ou 10, de préférence Q=4, N=9.

De façon avantageuse, la couche externe de chaque toron interne est désaturée, de préférence complètement insaturée.

Par définition, une couche de fils désaturée est telle qu'il existe suffisamment d'espace entre les fils de façon à permettre le passage d'une composition d'élastomère. Ainsi, une couche désaturée signifie que les fils de cette couche ne se touchent pas et qu'il y a suffisamment d'espace entre deux fils adjacents de la couche permettant le passage d'une composition d'élastomère au travers de la couche. Par opposition, une couche de fils saturée est telle qu'il n'existe suffisamment pas d'espace entre les fils de la couche de façon à permettre le passage d'une composition d'élastomère, par exemple car les fils de la couche se touchent deux à deux.

Avantageusement, la distance interfils de la couche externe de chaque toron interne est supérieure ou égale à 5 $\mu$m. De préférence, la distance interfils de la couche externe de chaque toron interne est supérieure ou égale à 15 $\mu$m, plus préférentiellement supérieure ou égale à 35 $\mu$m, encore plus préférentiellement supérieure ou égale à 50 $\mu$m et très préférentiellement supérieure ou égale à 60 $\mu$m.

La désaturation de la couche externe du toron interne permet avantageusement de faciliter le passage de la composition d'élastomère jusqu'au centre du toron interne et donc de rendre le toron interne moins sensible à la corrosion.

Par définition, une couche complètement insaturée de fils est telle qu'il existe suffisamment de place dans cette couche pour y ajouter au moins un $(X+1)^{ième}$ fil du même diamètre que les X fils de la couche, plusieurs fils pouvant alors être ou non au contact les uns des autres. En l'espèce, il existe suffisamment de place dans la couche externe de chaque toron interne pour y ajouter au moins un $(N+1)^{ième}$ fil externe du même diamètre que les N fils externe de la couche externe.

L'insaturation complète de la couche externe de chaque toron interne permet de maximiser la pénétration de la composition d'élastomère dans chaque toron interne et donc de rendre chaque toron interne encore moins sensible à la corrosion.

Ainsi, avantageusement, la somme SI2 des distances interfils de la couche externe de chaque toron interne est telle que SI2 $\geq$ D2. La somme SI2 est la somme des distances interfils séparant chaque couple de fils adjacents de la couche. La distance interfils d'une couche est définie, sur une section du câble perpendiculaire à l'axe principal du câble, comme la distance la plus courte qui sépare, en moyenne, deux fils adjacents de la couche. Ainsi, la distance interfils est calculée en divisant la somme SI2 par le nombre d'espaces séparant les fils de la couche.

Par opposition, une couche incomplètement insaturée fils serait telle qu'il n'existerait pas suffisamment de place dans cette couche pour y ajouter au moins un $(X+1)^{ième}$fil du même diamètre que les X' fils de la couche. En l'espèce, il n'existerait pas suffisamment de place dans la couche externe pour y ajouter au moins un $(N+1)^{ième}$fil externe du même diamètre que les N fils externe de la couche externe.

Dans des modes de réalisation préférés, chaque fil interne de chaque toron interne présente un diamètre D1 supérieur ou égal au diamètre D2 de chaque fil externe de chaque toron interne. L'utilisation de diamètres tels que D1>D2 permet de favoriser la pénétrabilité de la composition d'élastomère au travers de la couche intermédiaire. L'utilisation de diamètres tels que D1 =D2 permet de limiter le nombre de fils différents à gérer lors de la fabrication du câble.

Avantageusement, chaque toron interne est du type non gommé in situ. Par non gommé in situ, on entend qu'avant assemblage de la couche interne du câble et avant assemblage du câble, chaque toron interne est constitué des fils des différentes couches et dépourvu de composition de polymère, notamment de composition d'élastomère.

Torons externes du câble selon l'invention

Dans des modes de réalisation préférés, Q'=1, 2, 3 ou 4.

Dans un mode de réalisation, Q'=1, P'=5 ou 6 et N'=10, 11 ou 12, de préférence Q'=1, P'=5 ou 6 et N'=10 ou 11 et plus préférentiellement Q'=1, P'=6 et N'=11.

Dans des modes de réalisation préférés permettant d'augmenter la force à rupture du câble par rapport au mode de réalisation dans lequel Q'=1, Q'=2, 3 ou 4, de préférence Q'=3 ou 4.

Dans ces modes de réalisation préférés dans lesquels Q'>1, notamment ceux où Q'=3 ou 4, il existe un risque, lorsque le toron est insuffisamment pénétré, de voir une très forte propagation des agents corrosifs entre les Q'=3 ou 4 fils internes qui délimitent un capillaire central très favorable à leur propagation le long de chaque toron. Cet inconvénient peut être surmonté en rendant le toron pénétrable par la composition d'élastomère qui empêche alors les agents corrosifs d'accéder au capillaire central, et dans le meilleur des cas où le capillaire central est lui-même pénétré, la propagation de ces agents corrosifs le long du toron.

Dans des modes de réalisation préférés dans lesquels Q'>1, Q'=2, 3 ou 4, P'=7, 8, 9 ou 10, N'=13, 14 ou 15, de préférence Q'=3 ou 4, P'=8, 9 ou 10, N'=14 ou 15, plus préférentiellement Q'=3, P'=8 ou 9 et N'=14 ou 15 et encore plus préférentiellement Q'=3, P'=9 et N'=15.

De façon avantageuse, la couche intermédiaire de chaque toron externe est désaturée.

Comme déjà précisé, par définition, une couche de fils désaturée de fils est telle qu'il existe suffisamment d'espace entre les fils de façon à permettre le passage d'une composition d'élastomère. Ainsi, une couche désaturée signifie que les fils de cette couche ne se touchent pas et qu'il y a suffisamment d'espace entre deux fils adjacents de la couche permettant le passage d'une composition d'élastomère au travers de la couche. Par opposition, une couche de fils saturée est telle qu'il n'existe suffisamment pas d'espace entre les fils de la couche de façon à permettre le passage d'une composition d'élastomère, par exemple car les fils de la couche se touchent deux à deux.

Avantageusement, la distance interfils de la couche intermédiaire de chaque toton externe est supérieure ou égale à 5 $\mu$m. De préférence, la distance interfils de la couche intermédiaire de chaque toron externe est supérieure ou égale à 15 $\mu$m, plus préférentiellement supérieure ou égale à 35 $\mu$m, encore plus préférentiellement supérieure ou égale à 50 $\mu$m et très préférentiellement supérieure ou égale à 60 $\mu$m.

La désaturation de la couche intermédiaire de chaque toron externe permet avantageusement de faciliter le passage de la composition d'élastomère jusqu'au centre de chaque toron externe et donc de rendre le toron externe moins sensible à la corrosion.

Dans un mode de réalisation favorisant le compromis entre pénétrabilité de chaque toron externe et force à rupture, la couche intermédiaire de chaque toron externe est incomplètement insaturée.

Par définition, une couche incomplètement insaturée fils est telle qu'il n'existe pas suffisamment de place dans cette couche pour y ajouter au moins un $(X+1)^{ième}$ fil du même diamètre que les X fils de la couche. En l'espèce, il n'existe pas suffisamment de place dans la couche intermédiaire pour y ajouter au moins un $(P'+1)^{ième}$ fil intermédiaire du même diamètre que les P' fils intermédiaire de la couche intermédiaire.

L'insaturation incomplète de la couche intermédiaire de chaque toron externe permet d'assurer une stabilité architecturale de la couche intermédiaire. En outre, l'insaturation incomplète de la couche intermédiaire de chaque toron externe permet de s'assurer que chaque toron externe comprend un nombre relativement élevé de fils intermédiaires et donc présente une force à rupture relativement élevée.

Ainsi, avantageusement, la somme SI2' des distances interfils de la couche intermédiaire est telle que SI2' < D3' avec D'3 étant le diamètre de chaque fil externe de chaque toron externe, de préférence SI2' $\leq$ 0,8 x D3'. La somme SI'2 est la somme des distances interfils séparant chaque couple de fils adjacents de la couche intermédiaire. La distance interfils d'une couche est définie, sur une section du câble perpendiculaire à l'axe principal du câble, comme la distance la plus courte qui sépare, en moyenne, deux fils adjacents de la couche. Ainsi, la distance interfils est calculée en divisant la somme SI2' par le nombre d'espaces séparant les fils de la couche intermédiaire. Le diamètre D3' des fils externes de la couche externe de chaque toron externe étant préférentiellement supérieur à la somme SI2', on empêche les fils externes de pénétrer dans la couche intermédiaire. On assure ainsi une bonne stabilité architecturale, ce qui réduit de plus le risque de modification des fenêtres de passage radial de la composition d'élastomère et donc le risque de dégrader de la bonne pénétrabilité de chaque toron externe.

Dans un autre mode de réalisation favorisant la pénétrabilité de chaque toron externe, la couche intermédiaire de chaque toron externe est complètement insaturée.

Par définition, une couche complètement insaturée de fils est telle qu'il existe suffisamment de place dans cette couche pour y ajouter au moins un $(X+1)^{ième}$ fil du même diamètre que les X fils de la couche, plusieurs fils pouvant alors être ou non au contact les uns des autres. En l'espèce, il existe suffisamment de place dans la couche intermédiaire de chaque toron externe pour y ajouter au moins un $(P'+1)^{ième}$ fil intermédiaire du même diamètre que les P' fils intermédiaire de la couche intermédiaire.

Un tel mode de réalisation est particulièrement avantageux dans le cas où Q'=3 et P'=8 ou Q'=4 et P'=9 et dans le cas où D1'=D2'. En effet, si on avait Q'=3 et P'=9 ou Q'=4 et P'=10, la couche intermédiaire, même en étant désaturée, pourrait, dans certains cas, présenter une distance interfils insuffisante pour une pénétrabilité satisfaisante du toron.

De façon avantageuse, la couche externe de chaque toron externe est désaturée, de préférence complètement insaturée.

Comme déjà précisé, par définition, une couche de fils désaturée de fils est telle qu'il existe suffisamment d'espace entre les fils de façon à permettre le passage d'une composition d'élastomère. Ainsi, une couche désaturée signifie que les fils de cette couche ne se touchent pas et qu'il y a suffisamment d'espace entre deux fils adjacents de la couche permettant le passage d'une composition d'élastomère au travers de la couche. Par opposition, une couche de fils saturée est telle qu'il n'existe suffisamment pas d'espace entre les fils de la couche de façon à permettre le passage d'une composition d'élastomère, par exemple car les fils de la couche se touchent deux à deux.

Avantageusement, la distance interfils de la couche externe de chaque toron externe est supérieure ou égale à 5 $\mu$m. De préférence, la distance interfils de la couche externe de chaque toron externe est supérieure ou égale à 15 $\mu$m, plus préférentiellement supérieure ou égale à 35 $\mu$m, encore plus préférentiellement supérieure ou égale à 50 $\mu$m et très préférentiellement supérieure ou égale à 60 $\mu$m.

La désaturation de la couche externe de chaque toron externe permet avantageusement de faciliter le passage de la composition d'élastomère jusqu'au centre de chaque toron externe et donc de rendre chaque toron externe moins sensible à la corrosion.

Par définition, une couche complètement insaturée de fils est telle qu'il existe suffisamment de place dans cette couche pour y ajouter au moins un $(X'+1)^{ième}$ fil du même diamètre que les X' fils de la couche, plusieurs fils pouvant alors être ou non au contact les uns des autres. En l'espèce, il existe suffisamment de place dans la couche externe de chaque toron externe pour y ajouter au moins un (N'+1)$^{ième}$ fil externe du même diamètre que les N' fils externe de la couche externe.

L'insaturation complète de la couche externe de chaque toron externe permet de maximiser la pénétration de la composition d'élastomère dans chaque toron externe et donc de rendre chaque toron externe encore moins sensible à la corrosion.

Ainsi, avantageusement, la somme SI3' des distances interfils de la couche externe de chaque toron externe est telle que SI3' ≥ D3'. La somme SI3' est la somme des distances interfils séparant chaque couple de fils adjacents de la couche externe. La distance interfils d'une couche est définie, sur une section du câble perpendiculaire à l'axe principal du câble, comme la distance la plus courte qui sépare, en moyenne, deux fils adjacents de la couche. Ainsi, la distance interfils est calculée en divisant la somme SI3' par le nombre d'espaces séparant les fils de la couche externe.

Dans des modes de réalisation préférés, chaque fil interne de chaque toron externe présente un diamètre D1' supérieur ou égal au diamètre D2' de chaque fil intermédiaire de chaque toron externe. L'utilisation de diamètres tels que D1'>D2' permet de favoriser la pénétrabilité de la composition d'élastomère au travers de la couche intermédiaire. L'utilisation de diamètres tels que D1'=D2' permet de limiter le nombre de fils différents à gérer lors de la fabrication du câble.

Dans des modes de réalisation préférés, chaque fil interne de chaque toron externe présente un diamètre D1' supérieur ou égal au diamètre D3' de chaque fil externe de chaque toron externe. L'utilisation de diamètres tels que D1'>D3' permet de favoriser la pénétrabilité de la composition d'élastomère au travers de la couche externe. L'utilisation de diamètres tels que D1'=D3' permet de limiter le nombre de fils différents à gérer lors de la fabrication du câble.

Dans des modes de réalisation préférés, chaque fil intermédiaire de chaque toron externe présente un diamètre D2' égal au diamètre D3' de chaque fil externe de chaque toron externe. L'utilisation de diamètres tels que D2'=D3' permet de limiter le nombre de fils différents à gérer lors de la fabrication du câble.

Avantageusement, chaque toron externe est du type non gommé in situ. Par non gommé in situ, on entend qu'avant assemblage de la couche externe du câble et avant assemblage du câble, chaque toron externe est constitué des fils des différentes couches et dépourvu de composition de polymère, notamment de composition d'élastomère.

## PNEUMATIQUE SELON L'INVENTION

Un autre objet de l'invention est un pneumatique comprenant un câble tel que défini ci-dessus.

Le câble est tout particulièrement destiné à des véhicules industriels choisis parmi des véhicules lourds tels que "Poids lourd" - i.e., métro, bus, engins de transport routier (camions, tracteurs, remorques), véhicules hors-la-route -, engins agricoles ou de génie civil, autres véhicules de transport ou de manutention.

De manière préférentielle, le pneumatique est pour véhicule de type génie civil. Le pneumatique présente une dimension de type W R U dans laquelle, de façon connue pour l'homme du métier, W, désigne :

- le rapport nominal d'aspect H/B tel que défini par l'ETRTO, lorsqu'il est sous la forme H/B, H étant la hauteur de la section du pneumatique et B étant la largeur de la section du pneumatique,
- H.00 ou B.00, lorsqu'il est sous la forme H.00 ou B.00, dans lequel H=B, H et B étant tels que définis ci-dessus,

U représente le diamètre, en pouces, du siège de la jante sur laquelle le pneumatique est destiné à être monté, R désigne le type d'armature de carcasse du pneumatique, ici radiale. Des exemples de telles dimensions sont par exemple 40.00 R 57 ou encore 59/80 R 63.

On a de préférence U≥35, plus préférentiellement U≥49 et plus préférentiellement U≥57.

De façon très préférée, dans un mode de réalisation, le pneumatique est obtenu par un procédé comprenant une étape de noyage d'un câble tel que décrit ci-dessus dans une matrice polymérique, de préférence dans une matrice élastomérique, le câble étant, avant l'étape de noyage, dépourvu de toute composition polymérique ou élastomérique recouvrant, individuellement un ou plusieurs, ou collectivement plusieurs, torons internes de la couche interne du câble.

Avantageusement, le pneumatique comprend une armature de carcasse ancrée dans deux bourrelets et surmontée radialement par une armature de sommet elle-même surmontée d'une bande de roulement, l'armature de sommet étant réunie auxdits bourrelets par deux flancs et comportant au moins un câble tel que défini ci-dessus.

De façon avantageuse, l'armature de carcasse comprend au moins une nappe de carcasse comprenant des éléments filaires de renfort métalliques de carcasse agencés les uns sensiblement parallèlement aux autres dans la nappe de carcasse, chaque élément filaire de renfort métallique de carcasse faisant un angle compris entre 80° et 90° avec la direction circonférentielle du pneumatique.

Avantageusement, l'armature de sommet comprend une armature de travail comprenant au moins un câble tel que défini ci-dessus.

Avantageusement, l'armature de travail comprend au moins une nappe de travail comprenant des éléments filaires de renfort métalliques de travail agencés les uns sensiblement parallèlement aux autres, chaque élément filaire de renfort métallique de travail faisant un angle au plus égal à 60°, de préférence allant de 15° à 40° avec la direction circonférentielle du pneumatique et étant formé par un câble tel que défini ci-dessus.

Dans un mode de réalisation avantageux, l'armature de travail comprend au moins des première et deuxième nappes de travail, chaque première et deuxième nappe de travail comprenant respectivement des premiers et deuxièmes éléments filaires de renfort métalliques de travail agencés les uns sensiblement parallèlement aux autres dans chaque première et deuxième nappe de travail, chaque premier et deuxième élément filaire de renfort métallique de travail faisant un angle au plus égal à 60°, de préférence allant de 15° à 40° avec la direction circonférentielle du pneumatique et étant formé par un câble tel que défini ci-dessus.

Avantageusement, l'armature de sommet comprend une armature de protection comprenant au moins une nappe de protection comprenant des éléments filaires de renfort métalliques de protection agencés les uns sensiblement parallèlement aux autres, chaque élément filaire de renfort métallique de protection faisant un angle au moins égal à 10°, de préférence allant de 10° à 35° et préférentiellement de 15° à 30° avec la direction circonférentielle du pneumatique.

Dans un mode de réalisation avantageux, l'armature de protection comprend des première et deuxième nappes de protection, chaque première et deuxième nappes de protection comprenant respectivement des premiers et deuxièmes éléments filaires de renfort métalliques de protection agencés les uns sensiblement parallèlement aux autres dans chaque première et deuxième nappe de protection, chaque premier et deuxième élément filaire de renfort métallique de protection faisant un angle au moins égal à 10°, de préférence allant de 10° à 35° et préférentiellement de 15° à 30° avec la direction circonférentielle du pneumatique.

Dans un mode de réalisation préférentiel, l'armature de protection est radialement intercalée entre la bande de roulement et l'armature de travail.

Avantageusement, l'armature de sommet comprend une armature additionnelle comprenant au moins une nappe additionnelle comprenant des éléments filaires de renfort métalliques additionnels agencés les uns sensiblement parallèlement aux autres dans la nappe additionnelle, chaque élément filaire de renfort métallique additionnel faisant un angle au plus égal à 10°, de préférence allant de 5° à 10° avec la direction circonférentielle du pneumatique.

Dans un mode de réalisation avantageux, l'armature additionnelle comprend des première et deuxième nappes additionnelles, chaque première et deuxième nappes additionnelle comprenant respectivement des premiers et deuxièmes éléments filaires de renfort métalliques additionnels agencés les uns sensiblement parallèlement aux autres dans chaque première et deuxième nappe additionnelle, chaque premier et deuxième élément filaire de renfort métallique additionnel faisant un angle au plus égal à 10°, de préférence allant de 5° à 10° avec la direction circonférentielle du pneumatique.

L'invention sera mieux comprise à la lecture de la description qui va suivre, donnée uniquement à titre d'exemple non limitatif et faite en se référant aux dessins dans lesquels :

- la figure 1 est une vue en coupe perpendiculaire à la direction circonférentielle d'un pneumatique selon l'invention ;
- la figure 2 est une vue de détails de la zone II de la figure 1 ; et
- la figure 3 est une vue schématique en coupe perpendiculaire à l'axe du câble (supposé rectiligne et au repos) d'un câble selon un premier mode de réalisation de l'invention.

## EXEMPLE DE PNEUMATIQUE SELON L'INVENTION

Dans les figures, on a représenté un repère X, Y, Z correspondant aux orientations habituelles respectivement axiale (X), radiale (Y) et circonférentielle (Z) d'un pneumatique.

Le « plan circonférentiel médian » M du pneumatique est le plan qui est normal à l'axe de rotation du pneumatique et qui se situe à équidistance des structures annulaires de renfort de chaque bourrelet et passe par le milieu de l'armature de sommet.

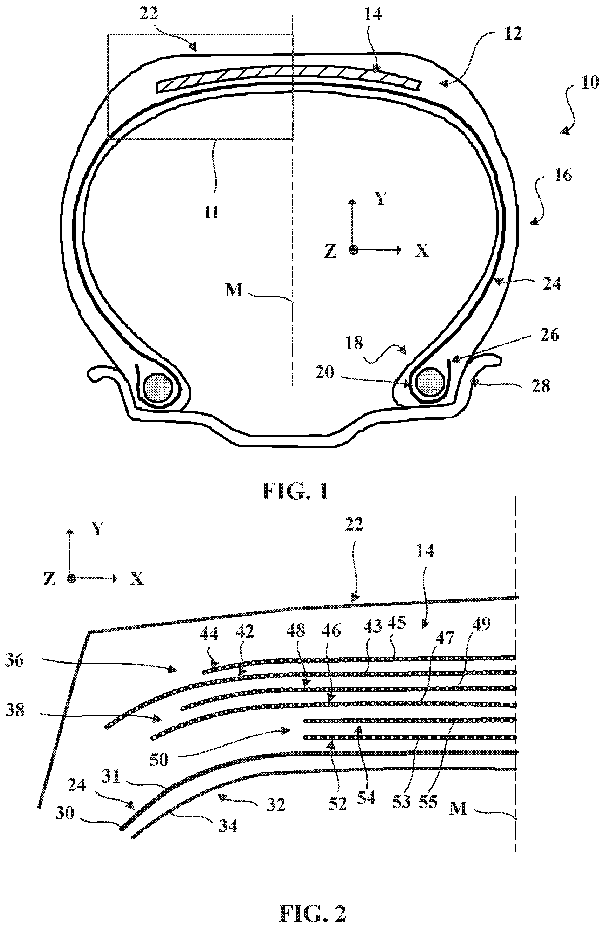

On a représenté sur les figures 1 et 2 un pneumatique selon l'invention et désigné par la référence générale 10.

Le pneumatique 10 est pour véhicule lourd de type génie civil, par exemple de type « dumper ». Ainsi, le pneumatique 10 présente une dimension de type 53/80R63.

Le pneumatique 10 comporte un sommet 12 renforcé par une armature de sommet 14, deux flancs 16 et deux bourrelets 18, chacun de ces bourrelets 18 étant renforcé avec une structure annulaire, ici une tringle 20. L'armature de sommet 14 est surmontée radialement d'une bande de roulement 22 et réunie aux bourrelets 18 par les flancs 16. Une armature de carcasse 24 est ancrée dans les deux bourrelets 18, et est ici enroulée autour des deux tringles 20 et comprend un retournement 26 disposé vers l'extérieur du pneumatique 20 qui est ici représenté monté sur une jante 28. L'armature de carcasse 24 est surmontée radialement par l'armature de sommet 14.

L'armature de carcasse 24 comprend au moins une nappe de carcasse 30 comprenant des éléments filaires de renfort métalliques de carcasse 31 agencés les uns sensiblement parallèlement aux autres dans la nappe de carcasse 30 et s'étendant d'un bourrelet 18 à l'autre de manière à faire un angle compris entre 80° et 90° avec la direction circonférentielle Z du pneumatique 10.

Le pneumatique 10 comprend également une nappe d'étanchéité 32 constituée d'un élastomère (communément appelée gomme intérieure) qui définit la face radialement interne 34 du pneumatique 10 et qui est destinée à protéger la nappe de carcasse 30 de la diffusion d'air provenant de l'espace intérieur au pneumatique 10.

L'armature de sommet 14 comprend, radialement de l'extérieur vers l'intérieur du pneumatique 10, une armature de protection 36 agencée radialement à l'intérieur de la bande de roulement 22, une armature de travail 38 agencée radialement à l'intérieur de l'armature de protection 36 et une armature additionnelle 50 agencée radialement à l'intérieur de l'armature de travail 38. L'armature de protection 36 est ainsi radialement intercalée entre la bande de roulement 22 et l'armature de travail 38. L'armature de travail 38 est radialement intercalée entre l'armature de protection 36 et l'armature additionnelle 50.

L'armature de protection 36 comprend des première et deuxième nappes de protection 42, 44, la première nappe 42 étant agencée radialement à l'intérieur de la deuxième nappe 44. Chaque première et deuxième nappes de protection 42, 44 comprend respectivement des premiers et deuxièmes éléments filaires de renfort métalliques de protection 43, 45 agencés les uns sensiblement parallèlement aux autres dans chaque première et deuxième nappe de protection 42, 44. Chaque premier et deuxième élément filaire de renfort métallique de protection 43, 45 fait un angle au moins égal à 10°, de préférence allant de 10° à 35° et préférentiellement de 15° à 30° avec la direction circonférentielle Z du pneumatique.

L'armature de travail 38 comprend des première et deuxième nappes de travail 46, 48, la première nappe 46 étant agencée radialement à l'intérieur de la deuxième nappe 48. Chaque nappe 46, 48 comprend au moins un câble 60. Chaque première et deuxième nappe de travail 46, 48 comprend respectivement des premiers et deuxièmes éléments filaires de renfort métalliques de travail 47, 49 agencés les uns sensiblement parallèlement aux autres dans chaque première et deuxième nappe de travail 46, 48. Chaque premier et deuxième élément filaire de renfort métallique de travail 47, 49 est ici formé par un câble 60 décrit ci-après. Chaque premier et deuxième élément filaire de renfort métallique de travail 47, 49 fait un angle au plus égal à 60°, de préférence allant de 15° à 40° avec la direction circonférentielle Z du pneumatique 10. De façon optionnelle, les premiers et deuxièmes éléments filaires de renfort métalliques de travail 47, 49 sont croisés d'une nappe de travail à l'autre.

L'armature additionnelle 50, également appelée bloc limiteur, dont la fonction est de reprendre en partie les sollicitations mécaniques de gonflage, comprend des première et deuxième nappes additionnelles 52, 54, chaque première et deuxième nappes additionnelle 52, 54 comprenant respectivement des premiers et deuxièmes éléments filaires de renfort métalliques additionnels 53, 55 agencés les uns sensiblement parallèlement aux autres dans chaque première et deuxième nappe additionnelle 52, 54. Chaque premier et deuxième élément filaire de renfort métallique additionnel 53, 55 fait un angle au plus égal à 10°, de préférence allant de 5° à 10° avec la direction circonférentielle Z du pneumatique 10. Les éléments filaire de renfort métalliques additionnels sont par exemple tels que décrits dans FR 2 419 181 ou FR 2 419 182.

## CABLE SELON UN PREMIER MODE DE REALISATION DE L'INVENTION

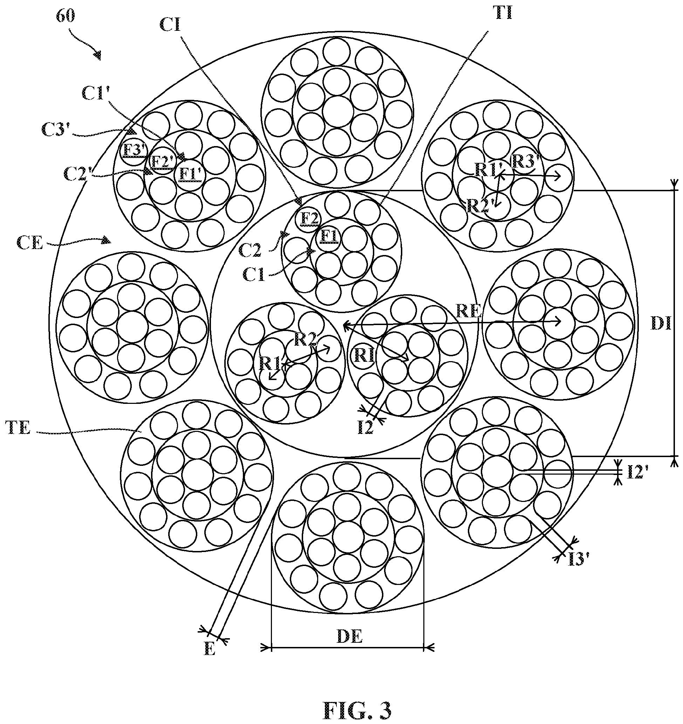

On a représenté sur la figure 3 le câble 60 conforme au mode de réalisation B et à bas module selon un premier mode de réalisation de l'invention.

Le câble 60 est métallique et est du type multi-torons à deux couches cylindriques. Ainsi, on comprend que les couches de torons constituant le câble 60 sont au nombre de deux, ni plus, ni moins. Les couches de torons sont adjacentes et concentriques. Le câble 60 est dépourvu de composition polymérique et de composition d'élastomère lorsqu'il n'est pas intégré au pneumatique.

Le câble 60 comprend une couche interne CI du câble 60 ainsi qu'une couche externe CE du câble 60. La couche interne CI est constituée de J>1 torons internes TI, c'est-à-dire plusieurs torons internes TI, enroulés en hélice. La couche externe CE est constituée de L>1 torons externes, c'est-à-dire plusieurs torons externes TE enroulé en hélice autour de la couche interne CI. En l'espèce, J=2, 3 ou 4, de préférence J=3 ou 4. De plus, L=7, 8, 9 ou 10, de préférence L=8, 9 ou 10. Avec J=3, L=7, 8 ou 9 et en l'espèce et ici J=3, L=8.

Le câble 60 comprend également une frette F constituée d'un unique fil de frette.

La couche interne CI est enroulée en hélice selon un sens d'enroulement de la couche interne du câble, ici le sens S. Les torons internes TI sont enroulés en hélice selon un pas PI tel que $10 \text{ mm} \leq PI \leq 65 \text{ mm}$ et de préférence $10 \text{ mm} \leq PI \leq 45 \text{ mm}$. Ici PI=20 mm. L'angle d'hélice $\alpha$ de chaque toron interne TI dans la couche interne CI du câble 60 va de 3° à 36° et, dans le cas du câble 60 conforme au mode B, de 3° à 31° et en l'espèce $\alpha$=13,6°.

La couche externe CE est enroulée en hélice autour de la couche interne CI selon un sens d'enroulement de la couche externe du câble opposé au sens d'enroulement de la couche interne du câble, ici le sens Z. Les torons externes TE sont enroulés en hélice autour du toron interne TI selon un pas PE tel que $30 \text{ mm} \leq PE \leq 65 \text{ mm}$ et de préférence $30 \text{ mm} \leq PE \leq 60 \text{ mm}$. Ici PE=40 mm. L'angle d'hélice $\alpha'$ de chaque toron externe TE dans la couche externe CE du câble 60 va de 10° à 34°, et, dans le cas du câble 60 conforme au mode B, de 10° à 31° et en l'espèce $\alpha'$=19,1°.

La frette F est enroulée autour de la couche externe CE selon un sens d'enroulement de la frette, ici opposé au sens d'enroulement de la couche externe CE, en l'espèce dans le sens S. Le fil de frette est enroulé en hélice autour des torons externes TE selon un pas PF tel que 2 mm ≤ PF ≤ 10 mm et de préférence 3 mm ≤ PF ≤ 8 mm. Ici pf=5,1 mm.

L'assemblage constitué par les couches interne CI et externe CE, c'est-à-dire le câble 60 sans la frette F, présente un diamètre D supérieur ou égal à 4 mm, de préférence supérieur ou égal à 4,5 mm et inférieur ou égal à 7 mm, de préférence inférieur ou égal à 6,5 mm. Ici, D=6,03 mm.

La couche interne CI de torons internes TI présente un diamètre DI. Chaque toron externe TE présente un diamètre DE. En l'espèce, DI=2,87 mm, DE=1,58 mm.

La couche externe CE du câble 60 est désaturée et incomplètement insaturée. La distance E inter-torons moyenne séparant deux torons externes TE adjacents est supérieure ou égale à 30 μm. Ici, la distance E inter-torons moyenne séparant deux torons externes TE adjacents est telle que E=43 μm. La somme SIE des distances interfils E de la couche externe CE est inférieure au diamètre DE des torons externes de la couche externe CE. Ici, la somme SIE=8 x 0,043= 0,34 mm, valeur strictement inférieure à DE=1,58 mm.

Torons internes TI du câble 60

Chaque toron interne TI est à deux couches. Chaque toron interne TI comprend, ici est constitué, de deux couches, pas plus, pas moins.

Chaque toron interne TI comprend une couche interne C1 constituée de Q≥1 fils internes F1 et une couche externe C2 constituée de N>1 fils externes F2 enroulés en hélice autour et au contact de la couche interne C1.

Q=2, 3 ou 4, de préférence Q=3 ou 4. N=7, 8, 9 ou 10, de préférence N=8, 9 ou 10. Avec Q=4, N=7, 8 ou 9 et en l'espèce Q=4, N=9.

La couche interne C1 de chaque toron interne TI est enroulée en hélice selon un sens d'enroulement de couche interne C1 du toron interne TI identique au sens d'enroulement de la couche interne CI du câble, ici selon le sens S. Les Q fils internes F1 sont assemblés au sein de chaque toron interne TI à un pas p1 tel que 5 mm ≤ p1 ≤ 20 mm. Ici p1=7,7 mm. L'angle d'hélice β de chaque fil interne F1 dans la couche interne C1 au sein de chaque toron interne TI va de 4° à 17°, ici β=9,9°.

La couche externe C2 de chaque toron interne TI est enroulée autour et au contact de la couche interne C1 selon un sens d'enroulement de couche externe C2 du toron interne TI identique au sens d'enroulement de la couche interne CI du câble, ici selon le sens S. Les N fils externes F2 sont enroulés en hélice autour des Q fils internes F1 et sont assemblés au sein de chaque toron interne TI à un pas p2 tel que 5 mm ≤ p2 ≤ 40 mm. Ici p2=15,4 mm. L'angle d'hélice γ de chaque fil externe F2 dans la couche externe C2 au sein de chaque toron interne TI va de 7° à 20°, ici γ=11,8°.

On a 16° ≤ 2α + β + γ ≤ 105° et comme Q>1, 20° ≤ 2α + β + γ ≤ 105°. En l'espèce, dans le cas du câble 60 conforme au mode B, 16° ≤ 2α + β + γ ≤ 86° et comme Q>1, 19° ≤ 2α + β + γ ≤ 85° et ici 2α + β + γ=48,9°.

Chaque fil interne F1 et externe F2 de chaque toron interne TI présente respectivement un diamètre D1, D2. Chaque diamètre des fils internes D1 et externes D2 de chaque toron interne TI va de 0,15 mm à 0,60 mm, de préférence de 0,20 mm à 0,50 mm, plus préférentiellement de 0,23 mm à 0,45 mm et encore plus préférentiellement de 0,25 mm à 0,40 mm. Chaque fil interne F1 de chaque toron interne TI présente un diamètre D1 supérieur ou égal, ici égal, au diamètre D2 de chaque fil externe F2 de chaque toron interne TI. En l'espèce, D1=D2=0,30 mm.

Du fait du pas p2 relativement court, la couche externe C2 de chaque toron interne TI est désaturée et complètement insaturée. La distance interfils I2 de la couche externe C2 séparant en moyenne les N fils externes est supérieure ou égale à 5 μm. La distance interfils I2 est de préférence supérieure ou égale à 15 μm, plus préférentiellement supérieure ou égale à 35 μm et ici égale à 46 μm. La somme SI2 des distances interfils I2 de la couche externe C2 est supérieure au diamètre d2 des fils externes F2 de la couche externe C2. Ici, la somme SI2=9 × 0,046=0,41 mm, valeur strictement supérieure à D2=0,30 mm.

A partir des valeurs décrites ci-dessus, on peut calculer l'indicateur MI = 200 × cos⁴(α) × [Q × (D1 / 2)² × cos⁴(β) + N × (D2 / 2)² × cos⁴(γ)] / [Q × (D1 / 2)² + N × (D2 / 2)²] avec D1 et D2 étant exprimés en mm, α, β et γ exprimés en degrés et tels que définis ci-dessus.

On a 71 ≤ MI ≤ 192 et dans le cas du câble 60 conforme au mode B, 81 ≤ MI ≤ 192. Dans le cas du câble 60, 136 ≤ MI ≤ 192. En l'espèce, MI=165.

On a également 36 GPa ≤ EI ≤ 180 GPa et dans le cas du câble 60 conforme au mode B qui présente une couche interne présentant un module relativement élevé, 56 GPa ≤ EI ≤ 180 GPa. Dans le cas du câble 60, 95 GPa ≤ EI ≤ 180 GPa. En l'espèce, EI=148 GPa.

Torons externes TE du câble 60

Chaque toron externe TE est à trois couches. Ainsi, chaque toron externe TE comprend, ici est constitué, de trois couches, pas plus, pas moins.

Chaque toron externe TE comprend une couche interne C1' constituée de Q'≥1 fils internes F1', une couche intermédiaire C2' constituée de P'>1 fils intermédiaires F2' enroulée en hélice autour et au contact de la couche interne C1' et une couche externe C3' constituée de N'>1 fils externes F3' enroulés en hélice autour et au contact de la couche intermédiaire C2'.

Q'=1, P'=5 ou 6 et N'=10, 11 ou 12, de préférence Q'=1, P'=5 ou 6, N'=10 ou 11 et plus préférentiellement ici Q'=1, P'=6 et N'=11.

Dans le cas où Q'>1, la couche interne C1' de chaque toron externe TE est enroulée en hélice selon un sens d'enroulement de couche interne C1' du toron externe TE, le sens d'enroulement de couche interne C1' du toron externe TE est identique au sens d'enroulement de la couche externe CE du câble, ici selon le sens Z. Ici, le Q'=1 fil interne F1' est assemblé au sein de chaque toron externe TE à un pas p1' infini de sorte que β'=0.

La couche intermédiaire C2' d'e chaque toron externe TE est enroulée autour et au contact de la couche interne C1' selon un sens d'enroulement de couche intermédiaire C2' du toron externe TE identique au sens d'enroulement de la couche externe CE du câble, ici selon le sens Z. Les P' fils intermédiaires F2' sont enroulés en hélice autour du Q'=1 fil interne F1' et sont assemblés au sein de chaque toron externe TE à un pas p2' tel que 5 mm ≤ p2' ≤ 20 mm. Ici p2'=7,7 mm. L'angle d'hélice δ' de chaque fil intermédiaires F2' dans la couche intermédiaire C2' au sein de chaque toron externe TE va de 6° à 22°, ici δ'=15,5°.

La couche externe C3' d'e chaque toron externe TE est enroulée autour et au contact de la couche intermédiaire C2' selon un sens d'enroulement de couche externe C3' du toron externe TE identique au sens d'enroulement de la couche externe CE du câble, ici selon le sens Z. Les N' fils externes F3' sont enroulés en hélice autour des P' fils intermédiaires F2' et sont assemblés au sein de chaque toron externe TE à un pas p3' tel que 10 mm ≤ p3' ≤ 40 mm. Ici p3'=15,4 mm. L'angle d'hélice γ' de chaque fil externe F3' dans la couche externe C3' au sein de chaque toron externe TE va de 7° à 22°, ici γ'=14,6°.

On a 47° ≤ 3α'+ β' + δ' + γ' ≤ 147° et dans le cas du câble 60 conforme au mode B 54° ≤ 3α' + β' + δ' + γ' ≤ 125° et comme Q'=1, 54° ≤ 3α' + β' + δ' + γ' ≤ 120°. En l'espèce, 3α' + β' + δ' + γ°=87,4°.

Chaque fil interne F1', intermédiaire F2' et externe F3' de chaque toron externe TE présente respectivement un diamètre D1', D2', D3'. Chaque diamètre des fils internes D1', intermédiaires D2' et externes D3' de chaque toron externe TE va de 0,15 mm à 0,60 mm, de préférence de 0,20 mm à 0,50 mm, plus préférentiellement de 0,23 mm à 0,45 mm et encore plus préférentiellement de 0,25 mm à 0,40 mm. Chaque Q' fil interne F1' de chaque toron externe TI' présente un diamètre D1' supérieur ou égal au diamètre D2' de chaque fil intermédiaire F2' de chaque toron externe TE. Chaque Q' fil interne F1' de chaque toron externe TE présente un diamètre D1' supérieur ou égal au diamètre D3' de chaque fil externe F3' de chaque toron externe TE. Chaque N' fil intermédiaire F2' de chaque toron externe TE présente un diamètre D2' égal au diamètre D3' de chaque fil externe F3' de chaque toron externe TE. En l'espèce, D1'=0.38 mm > D2'=D3'=0,30 mm.

La couche intermédiaire C2' de chaque toron externe TE est désaturée et incomplètement insaturée. La distance interfils I2' de la couche intermédiaire C2' séparant en moyenne les P' fils intermédiaires est supérieure ou égale à 5 μm. La distance interfils I2' est de préférence supérieure ou égale à 15 μm et ici égale à 32 μm. La somme SI2' des distances interfils I2' de la couche intermédiaire C2' est supérieure au diamètre D2 des fils intermédiaires F2'de la couche intermédiaire C2'. Ici, la somme SI2'=6 × 0,032=0,19 mm, valeur strictement inférieure à D2'=0,30 mm. De plus, la somme SI2' des distances interfils I2' est est telle que SI2' < D3' et même SI2' < 0.8 × D3'.

La couche externe C3' de chaque toron externe TE est désaturée et complètement insaturée. La distance interfils I3' de la couche externe C3' séparant en moyenne les N' fils externes est supérieure ou égale à 5 μm. La distance interfils I3' est de préférence supérieure ou égale à 15 μm, plus préférentiellement supérieure ou égale à 35 μm, encore plus préférentiellement supérieure ou égale à 50 μm et ici égale à 52 μm. La somme SI3' des distances interfils I3' de la couche externe C3' est supérieure au diamètre D3' des fils externes F3' de la couche externe C3'. Ici, la somme SI3'=11 × 0,052=0,57 mm, valeur strictement supérieure à D3'=0,30 mm.

A partir des valeurs décrites ci-dessus, on peut calculer ME = 200 × cos$^4$(α') × [Q' × (D1' / 2)$^2$ × cos$^4$(β') + P' × (D2' / 2)$^2$ × cos$^4$(δ') + N' × (D3' / 2)$^2$ × cos$^4$(γ')] / [Q' × (D1' / 2)$^2$ + P' × (D2 / 2)$^2$ + N' × (D3' / 2)$^2$] avec D1, D2 et D3 étant exprimés en mm, α', β', δ' et γ' exprimés en degrés et tels que définis ci-dessus.

On a 71 ≤ ME ≤ 181 et ici, la couche externe présentant un module relativement élevé 121 ≤ ME ≤ 181. Dans le cas du câble 60 conforme au mode B, on a 100 ≤ ME ≤ 174 et ici, la couche externe présentant un module relativement élevé 121 ≤ ME ≤ 174. En l'espèce, ME=141.

Chaque fil F1, F2, F1', F2', F3' présente une résistance à la rupture, notée Rm, telle que 2500 ≤ Rm ≤ 3100 MPa. On dit de l'acier de ces fils qu'il est de grade SHT (« Super High Tensile »). D'autres fils peuvent être utilisés, par exemple des fils de grade inférieur, par exemple de grade NT (« Normal Tensile ») ou HT (« High Tensile »), comme des fils de grade supérieur, par exemple de grade UT (« Ultra Tensile ») ou MT (« Mega Tensile »).

On a 84° ≤ 2α + β+ y + 3α' + β' + δ' + γ' ≤ 226° et comme Q>1 et Q'=1, 88° ≤ 2α + β+ y + 3α'+ β' + δ' + γ' ≤ 206°. Dans le cas du câble 60 conforme au mode B, on a 87° ≤ 2α + β+ y + 3α' + β' + δ' + γ' ≤ 172° et comme Q>1 et Q'=1, 90° ≤ 2α + β+ γ + 3α'+ β' + δ' + γ' ≤ 165° En l'espèce 2α + β + γ + 3α'+ β' + δ' + γ'=136,3°.

On a 0,70 ≤ ME/MI ≤ 1,30 et ici ME/MI=0,85. On a 0,49 ≤ EC/EI ≤ 1,49 et dans le cas du câble 60 conforme au mode B 0,55 ≤ EC/EI ≤ 1,44 et ici EC/EI=0,69.

Conformément à l'invention, l'indicateur MC = (J × MI + L × ME) / (J+L) est tel que 95 ≤ MC ≤ 175 et de préférence 95 ≤ MC ≤ 170 et plus préférentiellement 110 ≤ MC ≤ 170. Dans le cas du câble 60 conforme au mode B, 145 ≤ MC ≤ 163 et en l'espèce, MC=147.

On a également 50 GPa ≤ EC ≤ 160 GPa et dans ce mode de réalisation 90 GPa ≤ EC ≤ 130 GPa, ce qui fait du câble 60 un câble à bas module. Ici EC=102 GPa.

## PROCEDE DE FABRICATION DU CABLE SELON L'INVENTION

On fabrique le câble selon l'invention grâce à un procédé comprenant des étapes bien connues de l'homme du métier.

Dans une étape de fabrication des torons internes utilisant les étapes suivantes, opérées préférentiellement en ligne et en continu :

- tout d'abord, une première étape d'assemblage par retordage des Q fils internes F1 de la couche interne C1 au pas p1 et dans le sens S pour former la couche interne C1 en un premier point d'assemblage ;
- suivie d'une deuxième étape d'assemblage par retordage des N fils externes F2 autour des N fils internes F1 de la couche interne C1 au pas p2 et dans le sens S pour former la couche externe C2 et chaque toron interne TI en un deuxième point d'assemblage ;
- préférentiellement une étape d'équilibrage final des torsions.

Dans une étape de fabrication des torons externes utilisant les étapes suivantes opérées préférentiellement en ligne et en continu:

- tout d'abord, une première étape d'assemblage par retordage des Q' fils internes F1' de la couche interne C1' au pas p1' et dans le sens Z pour former la couche interne C1' en un premier point d'assemblage ; ici comme Q'=1, la première étape d'assemblage est évitée;
- suivie d'une deuxième étape d'assemblage par retordage des P' fils intermédiaires F2' autour des Q' fils internes F1' de la couche interne C1' au pas p2' et dans le sens Z pour former la couche intermédiaire C2' en un deuxième point d'assemblage;
- suivie d'une troisième étape d'assemblage par retordage des N' fils externes F3' autour des P' fils intermédiaires F2' de la couche intermédiaire C2' au pas p3' et dans le sens Z pour former la couche externe C3' et chaque toron externe TE en un troisième point d'assemblage ;
- préférentiellement une étape d'équilibrage final des torsions.

Par « équilibrage de torsion », on entend ici de manière bien connue de l'homme du métier l'annulation des couples de torsion résiduels (ou du retour élastique de de torsion) s'exerçant sur chaque fil du toron, dans la couche intermédiaire comme dans la couche externe.

Après cette étape ultime d'équilibrage de la torsion, la fabrication de chaque toron est terminée. Chaque toron est enroulé sur une ou plusieurs bobines de réception, pour stockage, avant l'opération ultérieure d'assemblage des torons élémentaires pour l'obtention du câble multi-torons.

Pour la fabrication du câble multi-torons de l'invention, on procède de manière bien connue de l'homme du métier, par câblage des torons précédemment obtenus, à l'aide de machines de câblage dimensionnées pour assembler des torons.

Dans une étape de fabrication de la couche interne CI, on assemble par câblage les Q torons internes TI au pas PI et dans le sens S pour former la couche interne CI en un premier point d'assemblage. Dans les modes de réalisation dans lesquels le pas PI est relativement court et donc dans lesquels α est relativement élevé, on assemble les Q torons internes TI par retordage afin de limiter le risque d'instabilité de la couche interne CI des torons TI.

Puis, dans une étape de fabrication ultérieure, on assemble par câblage les L torons externes TE autour de la couche interne CI au pas PE et dans le sens Z pour former l'assemblage des couches CI et CE. Dans les modes de réalisation dans lesquels le pas PE est relativement court et donc dans lesquels α' est relativement élevé, on assemble les L torons externes TE par retordage afin de limiter le risque d'instabilité de la couche externe CE des torons TE.

Dans une dernière étape de fabrication, on enroule la frette F au pas PF dans le sens S autour de l'assemblage précédemment obtenu.

Le pneumatique 10 est obtenu par un procédé comprenant une étape de noyage des câbles 60 dans une matrice polymérique d'une composition polymérique, ici d'une composition élastomérique telle que par exemple décrite ci-dessous. Chaque câble 60 est, avant l'étape de noyage, dépourvu de toute composition polymérique ou élastomérique recouvrant, individuellement un ou plusieurs, ou collectivement plusieurs, torons internes TI de la couche interne CI du câble 60.

Le câble est ensuite incorporé par calandrage à des tissus composites formés d'une composition connue à base de caoutchouc naturel et de noir de carbone à titre de charge renforçante, utilisée conventionnellement pour la fabrication des armatures de sommet de pneumatiques radiaux. Cette composition comporte essentiellement, en plus de l'élastomère et de la charge renforçante (noir de carbone), un antioxydant, de l'acide stéarique, une huile d'extension, du naphténate de cobalt en tant que promoteur d'adhésion, enfin un système de vulcanisation (soufre, accélérateur, ZnO).

Les tissus composites renforcés par ces câbles comportent une matrice de composition élastomérique formée de deux couches fines de composition élastomérique qui sont superposées de part et d'autre des câbles et qui présentent respectivement une épaisseur comprise entre 1 et 4 mm bornes incluses. Le pas de calandrage (pas de pose des câbles dans le tissu de composition élastomérique) va de 4 mm à 8 mm.

Ces tissus composites sont ensuite utilisés en tant que nappe de travail dans l'armature de sommet lors du procédé de fabrication du pneumatique, dont les étapes sont par ailleurs connues de l'homme du métier.

## CABLE SELON UN DEUXIEME MODE DE REALISATION DE L'INVENTION

On va maintenant décrire un câble 61 conforme au mode de réalisation B et à bas module selon un deuxième mode de réalisation de l'invention. Les éléments analogues à ceux du câble 60 sont désignés par des références identiques.

Parmi les différences entre les câbles 60 et 61, on notera que Q=1, N=5 ou 6 et ici Q=1, N=6.

On notera également que les N fils externes F2 sont enroulés en hélice autour du Q=1 fil interne F1 et sont assemblés au sein de chaque toron interne TI à un pas p2 tel que 5 mm $\leq$ p2 $\leq$ 30 mm. Ici p2=7,7 mm. L'angle d'hélice y de chaque fil externe F2 dans la couche externe C2 au sein de chaque toron interne TI va de 5° à 26°, ici $\gamma$=12,9°.

On notera également que 16° $\leq$ 2$\alpha$ + $\beta$ + $\gamma$ $\leq$ 105° et comme Q=1, 16° $\leq$ 2$\alpha$ + $\beta$ + $\times$ $\leq$ 86° et ici 2$\alpha$ + $\beta$ + $\gamma$=26,5°.

On notera que 71 $\leq$ ME $\leq$ 181 et ici, la couche externe présentant un module relativement faible 71 $\leq$ ME $\leq$ 120 et dans le cas du câble 61 conforme au mode B, 100 $\leq$ ME $\leq$ 120. En l'espèce, ME=110.

On notera que, comme Q=1 et Q'=1, 84° $\leq$ 2$\alpha$ + $\beta$+ y + 3$\alpha$' + $\beta$' + $\delta$' + $\gamma$' $\leq$ 199°. Dans le cas du câble 61 conforme au mode B, avec Q=1 et Q'=1, on a 87° $\leq$ 2$\alpha$ + $\beta$+ y + 3$\alpha$' + $\beta$' + $\delta$' + $\gamma$' $\leq$ 160° En l'espèce 2$\alpha$ + $\beta$ + y + 3$\alpha$' + $\beta$' + $\delta$' + $\gamma$'=136,3°.

On notera également que ME/MI $\leq$ 0,69 et de préférence 0,40 $\leq$ ME/MI $\leq$ 0,69. Dans le cas du câble 61 conforme au mode B 0,55 $\leq$ ME/MI $\leq$ 0,69 et ici ME/MI=0,61. On notera que EC/EI $\leq$ 0,72 et de préférence 0,36 $\leq$ EC/EI $\leq$ 0,72 et dans le cas du câble 61 conforme au mode B 0,52 $\leq$ EC/EI $\leq$ 0,72 et ici EC/EI=0,56.

## CABLE SELON UN TROISIEME MODE DE REALISATION DE L'INVENTION

On va maintenant décrire un câble 62 conforme au mode de réalisation B et à bas module selon un troisième mode de réalisation de l'invention. Les éléments analogues à ceux des câbles précédemment décrits sont désignés par des références identiques.

Parmi les différences entre les câbles 60 et 62, on notera que 71 $\leq$ MI $\leq$ 135 du fait d'une couche interne du câble présentant un module relativement faible. Dans le cas du câble 62 conforme au mode B, on a 81 $\leq$ MI $\leq$ 135 et en l'espèce, MI=109. On a également 36 GPa $\leq$ EI $\leq$ 94 GPa et dans le cas du câble 62 conforme au mode B 56 GPa $\leq$ EI $\leq$ 94 GPa. En l'espèce, EI=71 GPa.

On notera que 1,31 $\leq$ ME/MI et de préférence 1,31 $\leq$ ME/MI $\leq$ 2,03. Dans le cas du câble 62 conforme au mode B 1,31 $\leq$ ME/MI $\leq$ 1,89 et ici ME/MI=1,49. On notera que 1,02 $\leq$ EC/EI et de préférence 1,02 $\leq$ EC/EI $\leq$ 1,90 et dans le cas du câble 62 conforme au mode B 1,15 $\leq$ EC/EI et de préférence 1,15 $\leq$ EC/EI $\leq$ 1,62 et ici EC/EI=1,33.

## CABLE SELON UN QUATRIEME MODE DE REALISATION DE L'INVENTION

On va maintenant décrire un câble 63 conforme au mode de réalisation A et à très bas module selon un quatrième mode de réalisation de l'invention. Les éléments analogues à ceux des câbles précédemment décrits sont désignés par des références identiques.

Parmi les différences entre les câbles 60 et 63, on notera que l'angle d'hélice $\alpha$ de chaque toron interne TI dans la couche interne CI du câble 63 va, dans le cas du câble 63 conforme au mode A, de 5° à 36° et en l'espèce a=10°. On notera également que l'angle d'hélice $\alpha$' de chaque toron externe TE dans la couche externe CE du câble 63 va, dans le cas du câble 63 conforme au mode A, de 14° à 34° et en l'espèce $\alpha$'=14,5°.

On notera également, dans le cas du câble 63 conforme au mode A, 20° $\leq$ 2$\alpha$ + $\beta$ + $\gamma$ $\leq$105° et comme Q>1, 27° $\leq$ 2$\alpha$ + $\beta$ + $\gamma$ $\leq$ 105° et ici 2$\alpha$ + $\beta$ + $\gamma$=53,6°.

On notera que, dans le cas du câble 63 conforme au mode A, 71 $\leq$ MI $\leq$ 191 et dans le cas du câble 63, 136 $\leq$ MI $\leq$ 191. En l'espèce, MI=154. On notera également que, dans le cas du câble 63 conforme au mode A, 36 GPa $\leq$ EI $\leq$ 174 GPa. Dans le cas du câble 63, 95 GPa $\leq$ EI $\leq$ 174 GPa. En l'espèce, EI=130 GPa.

On notera que, dans le cas du câble 63 conforme au mode A et comme Q'=1, 66° $\leq$ 3$\alpha$' + $\beta$' + $\delta$' + $\gamma$' $\leq$ 147°.

En l'espèce, $3\alpha' + \beta' + \delta' + \gamma'$=93,5°.

On notera que, dans le cas du câble 63 conforme au mode A, $71 \le ME \le 163$ et ici, la couche externe présentant un module relativement élevé $121 \le ME \le 163$. En l'espèce, ME=123.

On notera également que dans le cas du câble 63 conforme au mode A, $146° \le 2\alpha + \beta + y + 3\alpha' + \beta' + \delta' + \gamma' \le 226°$ et comme Q>1 et Q'=1, $130° \le 2\alpha + \beta + y + 3\alpha' + \beta' + \delta' + \gamma' \le 206°$ En l'espèce $2\alpha + \beta + \gamma + 3\alpha' + \beta' + \delta' + \gamma'$=147,1 °.

On a, dans le cas du câble 63 conforme au mode A, $0,70 \le ME/MI \le 1,30$, ici ME/MI=0,80 et, $0,49 \le EC/EI \le 1,24$ et ici EC/EI=0,64.

Conformément à l'invention, l'indicateur MC = (J × MI + L × ME) / (J+L) est tel que $95 \le MC \le 170$ et dans le cas du câble 63 conforme au mode A, $95 \le MC \le 140$ et en l'espèce, MC=131. On notera également que, dans ce mode de réalisation du câble 63 conforme au mode A, $50$ GPa $\le EC \le 89$ GPa, ce qui fait du câble 63 un câble à très bas module. Ici EC=84 GPa.

## CABLE SELON UN CINQUIEME MODE DE REALISATION DE L'INVENTION

On va maintenant décrire un câble 64 conforme au mode de réalisation A et à très bas module selon un cinquième mode de réalisation de l'invention. Les éléments analogues à ceux des câbles précédemment décrits sont désignés par des références identiques.

Parmi les différences entre les câbles 63 et 64, on notera que, dans le cas du câble 64 conforme au mode A, $71 \le MI \le 135$ et en l'espèce, MI=80. On notera également que, dans le cas du câble 64 conforme au mode A $36$ GPa $\le EI \le 94$ GPa. En l'espèce, EI=42 GPa.

On notera que Q'>1, et ici Q'=2, 3 ou 4, P'=7, 8, 9 ou 10, N'=13, 14 ou 15 et ici Q'=3, P'=8 et N'=13.

On notera que les Q' fils internes F1' sont enroulés en hélice au sein de chaque toron externe TE à un pas p1' tel que $5$ mm $\le p1' \le 15$ mm. Ici, p1'=12 mm. L'angle d'hélice $\beta'$ de chaque fil interne F1' de la couche interne au sein de chaque toron externe TE va de 4° à 20°, ici $\beta'$=6°. Les P' fils intermédiaires F2' sont assemblés au sein de chaque toron externe TE à un pas p2' tel que $10$ mm $\le p2' \le 20$ mm. Ici p2'=18 mm. L'angle d'hélice $\delta'$ de chaque fil intermédiaires F2' dans la couche intermédiaire C2' au sein de chaque toron externe TE va de 8° à 22°, ici $\delta'$=10,9°. Les N' fils externes F3' sont assemblés au sein de chaque toron externe TE à un pas p3' tel que $10$ mm $\le p3' \le 40$ mm. Ici p3'=25 mm. L'angle d'hélice $\gamma'$ de chaque fil externe F3' dans la couche externe C3' au sein de chaque toron externe TE va de 9° à 25°, ici $\gamma'$=12,8°.

On notera également que, dans le cas du câble 64 conforme au mode A et comme Q'>1, $75° \le 3\alpha' + \beta' + \delta' + \gamma' \le 140°$. En l'espèce, $3\alpha' + \beta' + \delta' + \gamma'$=95,7°.

On notera que, dans le cas du câble 64 conforme au mode A et comme Q>1 et Q'>1, on a $146° \le 2\alpha + \beta + y + 3\alpha' + \beta' + \delta' + \gamma' \le 226°$. En l'espèce $2\alpha + \beta + \gamma + 3\alpha' + \beta' + \delta' + \gamma'$=188,9°.

On notera que $1,31 \le ME/MI$ et dans le cas du câble 64 conforme au mode A $1,31 \le ME/MI \le 2,12$ et ici ME/MI=1,70. On notera que, dans le cas du câble 64 conforme au mode A, $1,02 \le EC/EI$ et de préférence $1,02 \le EC/EI \le 1,90$ et ici EC/EI=1,72.

## CABLE SELON UN SIXIEME MODE DE REALISATION DE L'INVENTION

On va maintenant décrire un câble 65 conforme au mode de réalisation C et à moyen module selon un sixième mode de réalisation de l'invention. Les éléments analogues à ceux des câbles précédemment décrits sont désignés par des références identiques.

Parmi les différences entre les câbles 60 et 65, on notera que l'angle d'hélice $\alpha$ de chaque toron interne TI dans la couche interne CI du câble 65 conforme au mode C va de 3° à 20° et en l'espèce $\alpha$=6,8°. On notera également que l'angle d'hélice $\alpha'$ de chaque toron externe TE dans la couche externe CE du câble 65 conforme au mode C va de 10° à 22° et en l'espèce $\alpha'$=15,3°.

On notera également que Q=1, N=5 ou 6 et ici Q=1, N=6. Les N fils externes F2 sont enroulés en hélice autour du Q=1 fil internes F1 et sont assemblés au sein de chaque toron interne TI à un pas p2 tel que $5$ mm $\le p2 \le 30$ mm. Ici p2=5 mm. L'angle d'hélice y de chaque fil externe F2 dans la couche externe C2 au sein de chaque toron interne TI va de 5° à 26°, ici $\gamma$=19,4°.

On notera que, dans le cas du câble 65 conforme au mode C, on a $16° \le 2\alpha + \beta + \gamma \le 68°$ et comme Q=1, $16° \le 2\alpha + \beta + \gamma \le 56°$ et ici $2\alpha + \beta + \gamma$=33°.

On notera également que, dans le cas du câble 65 conforme au mode C, $125 \le MI \le 192$ et dans le cas du câble 65, $136 \le MI \le 192$. En l'espèce, MI=161. On notera également que, dans le cas du câble 65 conforme au mode C, $86$ GPa $\le EI \le 180$ GPa et dans le cas du câble 65, $95$ GPa $\le EI \le 180$ GPa et, en l'espèce, EI=165 GPa.

On notera que, dans le cas du câble 65 conforme au mode C, $47° \le 3\alpha' + \beta' + \delta' + \gamma' \le 89°$ et comme Q'=1, $47° \le 3\alpha' + \beta' + \delta' + \gamma' \le 86°$. En l'espèce, $3\alpha' + \beta' + \delta' + \gamma'$=71,4°.

On notera également que, dans le cas du câble 65 conforme au mode C, $142 \le ME \le 171$ et ici ME=158.

On notera que, dans le cas du câble 65 conforme au mode C, 84° ≤ 2α + β+ γ + 3α' + β' + δ' + γ' ≤ 136° et comme Q=1 et Q'=1, 84° ≤ 2α + β+ γ + 3α' + β' + δ' + γ' ≤ 112°. En l'espèce 2α + β + γ + 3α' + β' + δ' + γ'=104,2°.

On notera également que, dans le cas du câble 65 conforme au mode C, 0,75 ≤ ME/MI ≤ 1,30 ici ME/MI=0,98. On a alors, dans le cas du câble 65 conforme au mode C, 0,76 ≤ EC/EI ≤ 1,49 et ici EC/EI=0,90.

Conformément à l'invention, l'indicateur MC = (J × MI + L × ME) / (J+L) est tel que 95 ≤ MC ≤ 170 et de préférence 110 ≤ MC ≤ 170. Dans le cas du câble 65 conforme au mode C, 152 ≤ MC ≤ 170 et en l'espèce, MC=159. On a également 50 GPa ≤ EC ≤ 160 GPa et dans le mode de réalisation du câble 65 conforme au mode C, 131 GPa ≤ EC ≤ 160 GPa, ce qui fait du câble 65 un câble à moyen module. Ici EC=148 GPa.

## CABLE SELON UN SEPTIEME MODE DE REALISATION DE L'INVENTION

On va maintenant décrire un câble 66 conforme au mode de réalisation C et à moyen module selon un septième mode de réalisation de l'invention. Les éléments analogues à ceux des câbles précédemment décrits sont désignés par des références identiques.

Parmi les différences entre les câbles 65 et 66, on notera que Q=2, 3 ou 4, de préférence Q=3 ou 4. N=7, 8, 9 ou 10. Avec Q=3 et N=7, 8 ou 9 et ici Q=3, N=8.

On notera que les Q fils internes F1 sont assemblés au sein de chaque toron interne TI à un pas p1 tel que 5 mm ≤ p1 ≤ 20 mm. Ici p1=12 mm. L'angle d'hélice β de chaque fil interne F1 dans la couche interne C1 au sein de chaque toron interne TI va de 4° à 17°, ici β=6°. Les N fils externes F2 sont enroulés en hélice autour des Q fils internes F1 et sont assemblés au sein de chaque toron interne TI à un pas p2 tel que 5 mm ≤ p2 ≤ 40 mm. Ici p2=18 mm. L'angle d'hélice γ de chaque fil externe F2 dans la couche externe C2 au sein de chaque toron interne TI va de 7° à 20°, ici γ=10,9°.

On notera que, dans le cas du câble 66 conforme au mode C, comme Q>1, 20° ≤ 2α + β + y:5 68° et ici 2α + β + γ=26,9°.

On notera également que Q'>1, et ici Q'=2, 3 ou 4, P'=7, 8, 9 ou 10, N'=13, 14 ou 15 et ici Q'=3, P'=8 et N'=13.

On notera que les Q' fils internes F1' sont enroulés en hélice au sein de chaque toron externe TE à un pas p1' tel que 5 mm ≤ p1' ≤ 15 mm. Ici, p1'=12 mm. L'angle d'hélice β' de chaque fil interne F1' de la couche interne au sein de chaque toron externe TE va de 4° à 20°, ici β'=4,5°. Les P' fils intermédiaires F2' sont assemblés au sein de chaque toron externe TE à un pas p2' tel que 10 mm ≤ p2' ≤ 20 mm. Ici p2'=18 mm. L'angle d'hélice δ' de chaque fil intermédiaires F2' dans la couche intermédiaire C2' au sein de chaque toron externe TE va de 8° à 22°, ici δ'=8,1°. Les N' fils externes F3' sont assemblés au sein de chaque toron externe TE à un pas p3' tel que 10 mm ≤ p3' ≤ 40 mm. Ici p3'=25 mm. L'angle d'hélice γ' de chaque fil externe F3' dans la couche externe C3' au sein de chaque toron externe TE va de 9° à 25°, ici γ'=9,6°.

On notera que, dans le cas du câble 66 conforme au mode C et comme Q'>1, 62° ≤ 3α' + β' + δ' + γ' ≤ 89° et ici 3α' + β' + δ' + γ'=77,1°.

On notera que chaque câble décrit ci-dessus est métallique et est du type multi-torons à deux couches cylindriques. Ainsi, on comprend que les couches de torons constituant le câble sont au nombre de deux, ni plus, ni moins. Les couches de torons sont adjacentes et concentriques. On notera également que le câble est dépourvu de composition polymérique et de composition d'élastomère lorsqu'il n'est pas intégré au pneumatique.

On a résumé dans les tableaux 1 et 2 ci-dessous les caractéristiques des câbles 60 à 66 décrits ci-dessus ainsi que celles de l'exemple 2-4 de WO2008026271 identifié par la lettre T2-4 dans le tableau 1.

Dans ces tableaux 1 et 2, on a reporté les modules EC mesurés des câbles. Sur une courbe force-allongement mesurée selon la norme ASTM D2969-04, on identifie les allongements structuraux As, élastiques Ae et plastique Ap. L'allongement structural As est mesuré entre l'origine et l'intersection de la tangente à la partie élastique avec l'axe des abscisses. L'allongement élastique Ae est mesuré entre l'intersection de la tangente à la partie élastique avec l'axe des abscisses et l'intersection de la tangente à la partie élastique avec l'ordonnée correspondant à l'allongement à rupture. L'allongement plastique Ap est mesuré entre l'intersection de la tangente à la partie élastique avec l'ordonnée correspondant à l'allongement à rupture et l'allongement à rupture.

Bien entendu, l'invention n'est pas limitée aux exemples de réalisation précédemment décrits.

Pour des raisons de faisabilité industrielle, de coût et de performance globale, on préfère mettre en œuvre l'invention avec des fils linéaires, c'est-à-dire droits. En d'autres termes, les fils utilisés ne sont pas préformés avant leur assemblage.

On pourra également combiner les caractéristiques des différents modes de réalisation décrits ou envisagés ci-dessus sous réserve que celles-ci soient compatibles entre elles.

EP 3 728 730 B1

**Tableau 1**

| Câble | | | T2-4 | 60 | 61 | 62 |
|---|---|---|---|---|---|---|
| TI | | Q/N | 3/9 | 4/9 | 1/6 | 3/8 |
| | | D1/D2 | 0,175/0,175 | 0,30/0,30 | 0,30/0,26 | 0,26/0,26 |
| | | Pl/p1/p2 (mm) | 45/5,5/12 | 20/7,7/15,4 | 60/inf/7,7 | 15/8/15 |
| | | $\alpha/\beta/\gamma$ | 3,4/6,6/8,2 | 13,6/9,9/11,8 | 6,8/0/12,9 | 29,6/6,7/9,8 |
| | | $2\alpha + \beta + \gamma$ | 21,6 | 48,9 | 26,5 | 75,7 |
| | | MI | 191 | 165 | 179 | 109 |
| | | EI (GPa) | >170 | 148 | 171 | 71 |
| TE | | Q'/P'/N' | 3/9/15 | 1/6/11 | 1/6/11 | 1/6/11 |
| | | D1'/D2'/D3' | 0,255/0,255/0,255 | 0,38/0,30/0,30 | 0,30/0,26/0,26 | 0,30/0,26/0,26 |
| | | PE/p1'/p2'/p3' (mm) | 55/6/12/18 | 40/inf/7,7/15,4 | 35/inf/5/10 | 60/inf/15/25 |
| | | - $\alpha'/\beta'/\delta'/\gamma'$ | 10,3/8,8/11,9/12,9 | 19,1/0/15,5/14,6 | 25,1/0/19,4/18,7 | 17/0/6,7/7,7 |
| | | $3\alpha' + \beta' + \delta' + \gamma'$ | 64,5 | 874 | 113,4 | 65,4 |
| | | ME | 171 | 141 | 110 | 162 |
| J/L | | | 3/6 | 3/8 | 4/9 | 4/9 |
| MC | | | 178 | 147 | 131 | 146 |
| ME/MI | | | 0,89 | 0,85 | 0,61 | 1,49 |
| $3\alpha + \beta + \gamma + 3\alpha' + \beta' + \delta' + \gamma'$ | | | 86,1 | 136,3 | 139,9 | 141,1 |
| EC (GPa) | | | >160 | 102 | 97 | 94 |
| EC/EI | | | / | 0,69 | 0,56 | 1,33 |

**Tableau 2**

| Câble | | | 63 | 64 | 65 | 66 |
|---|---|---|---|---|---|---|
| TI | | Q/N | 3/8 | 3/8 | 1/6 | 3/8 |
| | | D1/D2 | 0,35/0,35 | 0,35/0,35 | 0,30/0,26 | 0,35/0,35 |
| | | Pl/p1/p2 (mm) | 30/5/10 | 15/8/15 | 60/inf/5 | 60/12/18 |
| | | $\alpha/\beta/\gamma$ | 10/14,4/19,2 | 35,6/9/13 | 6,8/0/19,4 | 5/6/10,9 |
| | | $2\alpha + \beta + \gamma$ | 53,60 | 93,20 | 33 | 26,90 |
| | | MI | 154 | 80 | 161 | 186 |
| | | EI (GPa) | 130 | 42 | 165 | 173 |
| TE | | Q'/P'/N' | 1/6/11 | 3/8/13 | 1/6/11 | 3/8/13 |
| | | D1/D2'/D3' | 0,39/0,35/0,35 | 0,35/0,35/0,35 | 0,30/0,26/0,26 | 0,26/0,26I0,26 |
| | | PE/p1'/p2'/p3' (mm) | 60/inf/5/10 | 60/12/18/25 | 60/inf/7,7/15,4 | 45/12/18/25 |
| | | $\alpha'/\beta'/\delta'/\gamma'$ | 14,5/0/25,4/24,6 | 22/6/10,9/12,8 | 15,3/0/12,9/12,4 | 18,3/4,5/8,1/9,6 |
| | | $3\alpha' + \beta' + \delta' + \gamma'$ | 93,5 | 95,7 | 71,4 | 77,1 |
| | | ME | 123 | 136 | 158 | 155 |
| J/L | | | 3/8 | 4/9 | 4/9 | 3/8 |
| MC | | | 131 | 119 | 159 | 164 |

(suite)

| Câble | 63 | 64 | 65 | 66 |
|---|---|---|---|---|
| ME/MI | 0,80 | 1,70 | 0,98 | 0,84 |
| $2\alpha + \beta + \gamma + 3\alpha' + \beta' + \delta' + \gamma'$ $2\alpha + \beta + \gamma + 3\alpha' + \beta' + \delta' + \gamma'$ | 147,1 | 188,9 | 104,2 | 104 |
| EC (GPa) | 84 | 72 | 148 | 142 |
| EC/EI | 0,64 | 1,72 | 0,90 | 0,82 |

## Revendications

1. Câble multi-torons <u>métallique</u> (60; 61; 62; 63; 64; 65; 66) à deux couches comprenant :

- une couche interne (CI) du câble constituée de J>1 torons internes (TI) enroulés en hélice, chaque toron interne (TI) étant à deux couches (C1, C2) et comprenant :

• une couche interne (C1) constituée de Q≥1 fils internes (F1) de diamètre D1, et
• une couche externe (C2) constituée de N>1 fils externes (F2) de diamètre D2 enroulés autour de la couche interne (C1),

- une couche externe (CE) du câble constituée de L>1 torons externes (TE) enroulés autour de la couche interne (CI) du câble, chaque toron externe (TE) étant à trois couches (C1', C2') et comprenant :

• une couche interne (C1') constituée de Q'≥1 fils internes (F1') de diamètre D1',
• une couche intermédiaire (C2') constituée de P'>1 fils intermédiaires (F2') de diamètre D2' enroulés autour de la couche interne (C1'), et
• une couche externe (C3') constituée de N'>1 fils externes (F3') de diamètre D3' enroulés autour de la couche intermédiaire (C2'),

**caractérisé en ce que** le câble satisfait la relation suivante :

$$95 \le MC \le 175$$

avec

$$MC = (J \times MI + L \times ME) / (J+L)$$

avec

$$MI = 200 \times \cos^4(\alpha) \times [Q \times (D1 / 2)^2 \times \cos^4(\beta) + N \times (D2 / 2)^2 \times \cos^4(\gamma)] / [Q \times (D1 / 2)^2 + N \times (D2 / 2)^2]$$

avec: - D1 et D2 étant exprimés en mm,

- $\alpha$ l'angle d'hélice de chaque toron interne (TI) dans la couche interne (CI) du câble,
- $\beta$ l'angle d'hélice de chaque fil interne (F1) dans la couche interne (C1) au sein de chaque toron interne (TI),
- $\gamma$ l'angle d'hélice de chaque fil externe (F2) dans la couche externe (C2) au sein de chaque toron interne (TI),
et $ME = 200 \times \cos^4(\alpha') \times [Q' \times (D1' / 2)^2 \times \cos^4(\beta') + P' \times (D2' / 2)^2 \times \cos^4(\delta') + N' \times (D3' / 2)^2 \times \cos^4(\gamma')] / [Q' \times (D1' / 2)^2 + P' \times (D2 / 2)^2 + N' \times (D3' / 2)^2]$ avec: - D1', D2' et D3' étant exprimés en mm

- $\alpha'$ l'angle d'hélice de chaque toron externe (TE) dans la couche externe (CE) du câble,
- $\beta'$ l'angle d'hélice de chaque fil interne (F1') dans la couche interne (C1') au sein de chaque toron externe (TE),

- $\delta'$ l'angle d'hélice de chaque fil intermédiaire (F2') dans la couche intermédiaire (C2') au sein de chaque toron externe (TE), et
- $\gamma'$ l'angle d'hélice de chaque fil externe (F3') dans la couche externe (C3') au sein de chaque toron externe (TE).

2. Câble (60; 61; 62; 63; 64; 65; 66) selon la revendication précédente, dans lequel $95 \leq MC \leq 170$, de préférence $110 \leq MC \leq 170$.

3. Câble (60; 61; 62; 63; 64; 65; 66) selon l'une quelconque des revendications précédentes, dans lequel $71 \leq MI \leq 192$.

4. Câble (60; 61; 62; 63; 64; 65; 66) selon l'une quelconque des revendications précédentes, dans lequel $71 \leq ME \leq 181$.

5. Câble (60; 61; 62; 63; 64; 65; 66) selon l'une quelconque des revendications précédentes, dans lequel $0,70 \leq ME/MI \leq 1,30$.

6. Câble (60; 61 ; 62; 63; 64; 65; 66) selon l'une quelconque des revendications précédentes, dans lequel l'angle d'hélice $\alpha$ de chaque toron interne (TI) dans la couche interne (CI) du câble va de 3° à 36°.

7. Câble (60; 61 ; 62; 63; 64; 65; 66) selon l'une quelconque des revendications précédentes, dans lequel l'angle d'hélice $\alpha'$ de chaque toron externe (TE) dans la couche externe (CE) du câble va de 10° à 34°.

8. Câble (60; 61; 62; 63; 64; 65; 66) selon l'une quelconque des revendications précédentes, dans lequel $16° \leq 2\alpha + \beta + \gamma \leq 105°$.

9. Câble (60; 61 ; 62; 63; 64; 65; 66) selon l'une quelconque des revendications précédentes, dans lequel $47° \leq 3\alpha' + \beta' + \delta' + \gamma' \leq 147°$.

10. Câble (60; 61; 62; 63; 64; 65; 66) selon l'une quelconque des revendications précédentes, dans lequel $84° \leq 2\alpha + \beta + \gamma + 3\alpha' + \beta' + \delta' + \gamma' \leq 226°$.

11. Câble (60; 61; 62; 63; 64; 65; 66) selon l'une quelconque des revendications précédentes, dans lequel J=2, 3 ou 4, de préférence J=3 ou 4.

12. Câble (60; 61; 62; 63; 64; 65; 66) selon l'une quelconque des revendications précédentes, dans lequel L=7, 8, 9 ou 10, de préférence L=8, 9 ou 10 et plus préférentiellement L=8 ou 9

13. Câble (60; 61; 62; 63; 64; 65; 66) selon l'une quelconque des revendications précédentes, dans lequel la couche externe (CE) du câble est désaturée.

14. Câble (60; 61; 62; 63; 64; 65; 66) selon l'une quelconque des revendications précédentes, présentant un module EC de $50 \text{ GPa} \leq EC \leq 160 \text{ GPa}$, le module EC est mesuré sur le câble issu de fabrication en mesurant la pente de la partie élastique d'une courbe force-allongement obtenue en appliquant la norme ASTM D2969-04 de 2014.

15. Pneumatique (10), **caractérisé en ce qu'**il comprend un câble (60; 61; 62; 63; 64; 65; 66) selon l'une quelconque des revendications précédentes.

**Patentansprüche**

1. Mehrlitzen-Drahtseil (60; 61; 62; 63; 64; 65; 66) mit zwei Schichten, umfassend:

- eine Innenschicht (CI) des Seils, die von J>1 spiralförmig gewickelten Innenlitzen (TI) gebildet ist, wobei jede Innenlitze (TI) drei Schichten (C1, C2) aufweist und Folgendes umfasst:

• eine Innenschicht (C1I), die von $Q \geq 1$ Innendrähten (F1) mit einem Durchmesser D1 gebildet ist,
• eine Zwischenschicht (C2), die von N>1 Zwischendrähten (F2) mit einem Durchmesser D2 gebildet ist, die um die Innenschicht (C1) gewickelt sind, und

- eine Außenschicht (CE) des Seils, die von L>1 Außenlitzen (TE) gebildet ist, die um die Innenschicht (CI) des Seils gewickelt sind, wobei jede Außenlitze (TE) drei Schichten (C1', C2') aufweist und Folgendes umfasst:

- eine Innenschicht (C1'), die von Q'≥1 Innendrähten (F1') einem Durchmesser D1' gebildet ist,
- eine Zwischenschicht (C2'), die von P'>1 Zwischendrähten (F2') mit einem Durchmesser D2' gebildet ist, die um die Innenschicht (C1') gewickelt sind, und
- eine Außenschicht (C3'), die von N'>1 Außendrähten (F3') mit einem Durchmesser D3' gebildet ist, die um die Zwischenschicht (C2') gewickelt sind,

**dadurch gekennzeichnet, dass** das Seil das folgende Verhältnis erfüllt:

$$95 \leq MC \leq 175$$

wobei

$$MC = (J \times MI + L \times ME) / (J+L)$$

wobei

$$MI = 200 \times \cos^4(\alpha) \times [Q \times (D1 / 2)^2 \times \cos^4(\beta) + N \times (D2 / 2)^2 \times \cos^4(y)] / [Q \times (D1 / 2)^2 + N \times (D2 / 2)^2$$

wobei: - D1, D2 und D3 in mm ausgedrückt sind,

- $\alpha$ der Helixwinkel jeder Innenlitze (TI) in der Innenschicht (CI) des Seils ist,
- $\beta$ der Helixwinkel jedes Innendrahts (F1) in der Innenschicht (C1) innerhalb jeder Innenlitze (TI) ist,
- $\gamma$ der Helixwinkel jedes Zwischendrahts (F2) in der Zwischenschicht (C2) innerhalb jeder Innenlitze (TI) ist, und

$$ME = 200 \times \cos^4(\alpha') \times [Q' \times (D1' / 2)^2 \times \cos^4(\beta') + P' \times (D2' / 2)^2 \times \cos^4(\delta') + N' \times (D3' / 2)^2 \times \cos^4(\gamma')] / [Q' \times (D1' / 2)^2 + P' \times (D2 / 2)^2 + N' \times (D3' / 2)^2]$$

wobei: - D1', D2' und D3' in mm ausgedrückt sind

- $\alpha'$ der Helixwinkel jeder Außenlitze (TE) in der Außenschicht (CE) des Seils ist,
- $\beta'$ der Helixwinkel jedes Innendrahts (F1') in der Innenschicht (C1') innerhalb jeder Außenlitze (TE) ist,
- $\delta'$ der Helixwinkel jedes Zwischendrahts (F2') in der Zwischenschicht (C2') innerhalb jeder Außenlitze (TE) ist, und
- $\gamma'$ der Helixwinkel jedes Außendrahts (F3') in der Außenschicht (C3') innerhalb jeder Außenlitze (TE) ist.

2. Seil (60; 61; 62; 63; 64; 65; 66) nach dem vorhergehenden Anspruch, wobei 95 ≤ MC ≤ 170, vorzugsweise 110 ≤ MC ≤ 170.

3. Seil (60; 61; 62; 63; 64; 65; 66) nach einem der vorhergehenden Ansprüche, wobei 71 ≤ MI ≤ 192.

4. Seil (60; 61; 62; 63; 64; 65; 66) nach einem der vorhergehenden Ansprüche, wobei 71 ≤ ME ≤ 181.

5. Seil (60; 61; 62; 63; 64; 65; 66) nach einem der vorhergehenden Ansprüche, wobei 0,70 ≤ ME/MI ≤ 1,30.

6. Seil (60; 61; 62; 63; 64; 65; 66) nach einem der vorhergehenden Ansprüche, wobei der Helixwinkel $\alpha$ jeder Innenlitze (TI) in der Innenschicht (CI) des Seils von 3° bis 36° beträgt.

7. Seil (60; 61; 62; 63; 64; 65; 66) nach einem der vorhergehenden Ansprüche, wobei der Helixwinkel $\alpha'$ jeder Außenlitze

(TE) in der Außenschicht (CE) des Seils von 10° bis 34° beträgt.

8. Seil (60; 61; 62; 63; 64; 65; 66) nach einem der vorhergehenden Ansprüche, wobei $16° \leq 2\alpha + \beta + y \leq 105°$.

9. Seil (60; 61; 62; 63; 64; 65; 66) nach einem der vorhergehenden Ansprüche, wobei $47° \leq 3\alpha' + \beta' + \delta' + \gamma' \leq 147°$.

10. Seil (60; 61; 62; 63; 64; 65; 66) nach einem der vorhergehenden Ansprüche, wobei $84° \leq 2\alpha + \beta + \gamma + 3\alpha' + \beta' + \delta' + \gamma' \leq 226°$.

11. Seil (60; 61; 62; 63; 64; 65; 66) nach einem der vorhergehenden Ansprüche, wobei J = 2, 3 oder 4, vorzugsweise J = 3 oder 4.

12. Seil (60; 61; 62; 63; 64; 65; 66) nach einem der vorhergehenden Ansprüche, wobei L = 7, 8, 9 oder 10, vorzugsweise L = 8, 9 oder 10 und besser noch L = 8 oder 9.

13. Seil (60; 61; 62; 63; 64; 65; 66) nach einem der vorhergehenden Ansprüche, wobei die Außenschicht (CE) des Seils entsättigt ist.

14. Seil (60; 61; 62; 63; 64; 65; 66) nach einem der vorhergehenden Ansprüche, aufweisend einen EC-Modul von 50 $GPa \leq EC \leq 160$ GPa, wobei der EC-Modul am Seil aus der Fertigung durch Messung der Steigung des elastischen Abschnitts einer Kraft-Dehnungs-Kurve gemessen wird, die unter Anwendung der Norm ASTM D2969-04 von 2014 erhalten wird.

15. Reifen (10), **dadurch gekennzeichnet, dass** er ein Seil (60; 61; 62; 63; 64; 65; 66) nach einem der vorhergehenden Ansprüche umfasst.

**Claims**

1. Two-layer multi-strand metallic cord (60; 61; 62; 63; 64; 65; 66) comprising:

   - an internal layer (CI) of the cord made up of J>1 internal strands (TI) wound in a helix, each internal strand (TI) having two layers (C1, C2) and comprising:

     • an internal layer (C1) made up of $Q^2 \geq 1$ internal threads (F1) of diameter D1, and
     • an external layer (C2) made up of N>1 external threads (F2) of diameter D2 wound around the internal layer (C1),
     •

   - an external layer (CE) of the cord made up of L>1 external strands (TE) wound around the internal layer (CI) of the cord, each external strand (TE) having three layers (C1', C2') and comprising:

     • an internal layer (C1') made up of $Q' \geq 1$ internal threads (F1') of diameter D1',
     • an intermediate layer (C2') made up of P'>1 intermediate threads (F2') of diameter D2' wound around the internal layer (C1'), and
     • an external layer (C3') made up of N'>1 external threads (F3') of diameter D3' wound around the intermediate layer (C2'),

   **characterized in that** the cord satisfies the following relationship:

   $$95 \leq MC \leq 175$$

   where

   $$MC = (J \times MI + L \times ME) / (J+L)$$

where

$$MI = 200 \times \cos^4(\alpha) \times [Q \times (D1 / 2)^2 \times \cos^4(\beta) + N \times (D2 / 2)^2 \times \cos^4(\gamma)] / [Q \times (D1 / 2)^2 + N \times (D2 / 2)^2]$$

where: - D1 and D2 are expressed in mm,

- $\alpha$ is the helix angle of each internal strand (TI) in the internal layer (CI) of the cord,
- $\beta$ is the helix angle of each internal thread (F1) in the internal layer (C1) within each internal strand (TI),
- $\gamma$ is the helix angle of each external thread (F2) in the external layer (C2) within each internal strand (TI), and

$$ME = 200 \times \cos^4(\alpha') \times [Q' \times (D1' / 2)^2 \times \cos^4(\beta') + P' \times (D2' / 2)^2 \times \cos^4(\delta') + N' \times (D3' / 2)^2 \times \cos^4(\gamma')] / [Q' \times (D1' / 2)^2 + P' \times (D2 / 2)^2 + N' \times (D3' / 2)^2]$$

where: - D1', D2' and D3' are expressed in mm

- $\alpha'$ is the helix angle of each external strand (TE) in the external layer (CE) of the cord,
- $\beta'$ is the helix angle of each internal thread (F1') in the internal layer (C1') within each external strand (TE),
- $\delta'$ is the helix angle of each intermediate thread (F2') in the intermediate layer (C2') within each external strand (TE), and
- $\gamma'$ is the helix angle of each external thread (F3') in the external layer (C3') within each external strand (TE).

2. Cord (60; 61; 62; 63; 64; 65; 66) according to the preceding claim, wherein $95 \leq MC \leq 170$, and preferably $110 \leq MC \leq 170$.

3. Cord (60; 61; 62; 63; 64; 65; 66) according to either one of the preceding claims, wherein $71 \leq MI \leq 192$.

4. Cord (60; 61; 62; 63; 64; 65; 66) according to any one of the preceding claims, wherein $71 \leq ME \leq 181$.

5. Cord (60; 61; 62; 63; 64; 65; 66) according to any one of the preceding claims, wherein $0.70 \leq ME/MI \leq 1.30$.

6. Cord (60; 61; 62; 63; 64; 65; 66) according to any one of the preceding claims, wherein the helix angle $\alpha$ of each internal strand (TI) in the internal layer (CI) of the cord ranges from 3° to 36°.

7. Cord (60; 61; 62; 63; 64; 65; 66) according to any one of the preceding claims, wherein the helix angle $\alpha'$ of each external strand (TE) in the external layer (CE) of the cord ranges from 10° to 34°.

8. Cord (60; 61; 62; 63; 64; 65; 66) according to any one of the preceding claims, wherein $16° \leq 2\alpha + \beta + \gamma \leq 105°$.

9. Cord (60; 61; 62; 63; 64; 65; 66) according to any one of the preceding claims, wherein $47° \leq 3\alpha' + \beta' + \delta' + \gamma' \leq 147°$.

10. Cord (60; 61; 62; 63; 64; 65; 66) according to any one of the preceding claims, wherein $84° \leq 2\alpha + \beta + \gamma + 3\alpha' + \beta' + \delta' + \gamma' \leq 226°$.

11. Cord (60; 61; 62; 63; 64; 65; 66) according to any one of the preceding claims, wherein J=2, 3 or 4, and preferably J=3 or 4.

12. Cord (60; 61; 62; 63; 64; 65; 66) according to any one of the preceding claims, wherein L=7, 8, 9 or 10, preferably L=8, 9 or 10 and more preferably L=8 or 9.

13. Cord (60; 61; 62; 63; 64; 65; 66) according to any one of the preceding claims, wherein the external layer (CE) of the cord is desaturated.

14. Cord (60; 61; 62; 63; 64; 65; 66) according to any one of the preceding claims, having a modulus EC such that 50 GPa $\leq$ EC $\leq$ 160 GPa, the modulus EC of a cord is calculated by measuring the gradient of the elastic portion of a force-elongation curve obtained by applying standard ASTM D2969-04 of 2014 to the cord tested.

15. Tyre (10), **characterized in that** it comprises a cord (60; 61; 62; 63; 64; 65; 66) according to any one of the preceding claims.

**FIG. 1**

**FIG. 2**

**FIG. 3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008026271 A
- WO 2015090920 A
- US 5843583 A
- WO 2005014925 A
- WO 2007090603 A
- FR 2419181
- FR 2419182